# EUROPEAN PATENT SPECIFICATION

(11) **EP 3 826 146 B1**
(45) Date of publication and mention of the grant of the patent: **10.07.2024**
(21) Application number: 19838811.8
(22) Date of filing: 20.05.2019
(51) Int. Cl.: H01F 41/04

(54) **MOTOR**
MOTOR
MOTEUR

(30) Priority: 18.07.2018 JP 2018134639
(43) Date of publication of application: 26.05.2021
(73) Proprietor: Panasonic Intellectual Property Management Co., Ltd., Osaka-shi, Osaka 540-6207 (JP)
(72) Inventor: UKAJI, Hajime, Osaka-shi, Osaka 540-6207 (JP); TAMAMURA, Toshiyuki, Osaka-shi, Osaka 540-6207 (JP); KAWAMURA, Kiyomi, Osaka-shi, Osaka 540-6207 (JP); NUKADA, Keiichiro, Osaka-shi, Osaka 540-6207 (JP)
(74) Representative: SSM Sandmair
(86) International application number: PCT/JP2019/019821
(87) International publication number: WO 2020/017143

(56) References cited:
- EP-A1- 2 833 521
- JP-A- 2004 254 435
- JP-A- 2005 304 244
- JP-A- 2010 279 226
- JP-A- S5 467 604
- JP-U- S5 717 238
- JP-U- S59 126 553
- JP-U- S60 171 048
- JP-U- S60 171 048
- JP-Y1- S3 513 720

## Description

### TECHNICAL FIELD

The present invention relates to a motor. The present invention particularly relates to a configuration of a stator coil for a motor.

### BACKGROUND ART

In recent years, a demand for motors has increased in industrial and vehicle applications. As the demand for motors increases, improvement in efficiency and cost reduction of a motor have been demanded.

As one method of improving the efficiency of the motor, it is known to improve a space factor of a stator coil arranged in a slot of a stator. Improving the space factor of the stator coil makes it possible to reduce a loss caused by a current flowing through the stator coil when the motor is driven.

As a method for improving the space factor of the stator coil, a configuration in which a cast coil made of a copper material is arranged in the slot has been proposed (for example, see DE 10 2012 212 637 A1).

Heat is one of factors that lower the efficiency of the motor, and it is known to circulate a refrigerant inside the motor to inhibit a temperature rise (for example, see Unexamined Japanese Patent Publication No. 2015-109733).

As the space factor of the stator coil improves, a dead space in the slot is smaller. However, the dead space constitutes a part of a flow path of the refrigerant, and reduction of the dead space in the slot is equivalent to narrowing of the flow path of the refrigerant, which reduces a flow rate of the refrigerant. As a result, a cooling effect of the refrigerant does not work effectively. Furthermore, a self temperature rise due to self heat generation of the stator coil or a tooth that constitutes a magnetic core of the stator coil becomes excessive, which results in a decrease in the efficiency of the motor. Note that, as will be apparent to those skilled in the art, the efficiency of the motor is a ratio of a mechanical output from the motor to an input power to the motor expressed as a percentage (unit symbol [%]). Furthermore, as will be apparent to those skilled in the art, the space factor is a ratio of a conductor portion such as a conductive wire to an accommodation cross-sectional area of a winding accommodation portion such as the slot or an insulator. If a cross section of the conductive wire or the like is circular, there is generated a dead space between adjacent circles, and thus enhancing the space factor is limited. Furthermore, a thickness or the like of an insulating coating of the conductive wire also is a factor that reduces the space factor. Incidentally, when the thickness of the insulating coating of the conductive wire is constant, the smaller a diameter dimension of the conductive wire, the higher a ratio of the thickness of the insulating coating or an area occupied by the insulating coating.

EP 2 833 521 A1 discloses a stator coil using a rectangular conductor and the stator coil is provided with at least one recessed portion with respect to a virtual envelope surface including an outer peripheral portion of the coil.

JP S60 171048 U discloses a stator coil wherein cooling fins protruded from the coil to dissipate heat generated in the coil.

### Citation List

### Patent Literature

PTL1: DE 10 2012 212 637 A1
PTL2: Unexamined Japanese Patent Publication No. 2015-109733
PTL3: EP 2 833 521 A1
PTL4: JP S60 171048 U

### SUMMARY OF THE INVENTION

The invention is defined by the subject-matter of independent claim 1. The dependent claims are directed to advantageous embodiments.

### ADVANTAGES OF THE INVENTION

Advantageously, there is implemented, in a motor having a configuration in which a space factor of a stator coil is increased, a highly efficient motor by further enhancing a cooling effect for the stator coil with a refrigerant.

Advantageously, a motor includes a stator core and a stator coil having, as a magnetic core, a tooth protruding from the stator core. The stator coil is a spiral coil having a spiral laminated structure including annular bodies having predetermined n-turns (n is a natural number). Note that an aspect of the stator coil in the motor of the present invention is also expressed as a single-layer solenoid coil.

The stator coil, which is the spiral coil, includes the annular bodies each including a conductive wire portion having a polygonal cross section. The stator coil has a mode in which a shape of at least a part of coil top portions and coil bottom portions of annular bodies having a plurality of turns in the spiral coil is at least partially smaller on an outer peripheral side than that of an annular body having another adjacent turn. Note that the coil top portion and the coil bottom portion may both be referred to as coil end portions.

As compared with a stator coil illustrated as a conventional example, the stator coil in the motor of the present invention has a structure that increases a heat dissipation area for air, a refrigerant, oil, or the like, and also has a structure that increases circulation passages for air, a refrigerant, oil, or the like. This structure makes it possible to efficiently enhance the cooling effect for the stator coil. Therefore, it is also possible to implement the highly efficient motor.

Furthermore, the stator coil, which is the spiral coil, has a mode in which, between adjacent spiral coils in a slot of a stator of the motor, width dimensions of conductors of annular bodies having some turns, out of the annular bodies having a plurality of turns included in the stator coil, are narrower than a width dimension of a conductor of an annular body adjacent to the annular bodies having some turns.

Also with this configuration, similarly to the above, the stator coil in the motor of the present invention has a structure that increases a heat dissipation area for air, a refrigerant, oil, or the like, as compared with the stator coil illustrated as the conventional example. Furthermore, the structure is such that the circulation passages for air, a refrigerant, oil, or the like are increased. This structure makes it possible to efficiently enhance the cooling effect for the stator coil. Therefore, it is possible to implement the highly efficient motor. In addition, fluid such as air, a refrigerant, or oil passes from an upstream side of a flow to a downstream side of the flow through a gap (oil passage) near the stator coil, and further, a circulation is smoothed, so that a heat dissipation effect can be enhanced. The details will be described below.

Advantageously, a motor at least includes a stator core including a laminated body where a plurality of stator core sheets is laminated, a stator including a stator coil that uses, as a part of a magnetic core, a tooth included in the stator core, and a rotor rotatably supported via a tip of the tooth of the stator core and a void,
wherein the stator coil constitutes a spiral coil including annular bodies having a predetermined number of turns, each of the annular bodies includes a conductive wire portion, the conductive wire portion includes a conductor portion and an insulating coating that covers the conductor portion, the conductor portion has a substantially quadrangular cross-sectional shape,
a part of each of the annular bodies that is located on each of laminating surface sides of the tooth is defined as a coil wire path portion, a portion that is a part of each of the annular bodies and is located between end portions of a pair of the coil wire path portions in a same direction is defined as a coil end portion, a portion where one end of the coil wire path portion transitions to one end of the coil end portion is defined as a coil corner portion, and the stator coil is provided with at least one recessed portion that is recessed with respect to a virtual envelope surface including an outer peripheral portion of the coil end portion, an outer peripheral portion of the coil wire path portion, and an outer peripheral portion of the coil corner portion in the spiral coil.

Furthermore, another motor at least includes a stator core including a laminated body where a plurality of stator core sheets is laminated, a stator including a stator coil that uses, as a part of a magnetic core, a tooth included in the stator core, and a rotor rotatably supported via a tip of the tooth of the stator core and a void,
wherein the stator coil constitutes a spiral coil including annular bodies having a predetermined number of turns, each of the annular bodies includes a conductive wire portion, the conductive wire portion includes a conductor portion and an insulating coating that covers the conductor portion, the conductor portion has a substantially quadrangular cross-sectional shape,
when a part of each of the annular bodies that is located on each of laminating surface sides of the tooth is defined as a coil wire path portion, a portion that is a part of each of the annular bodies and is located between end portions of a pair of the coil wire path portions in a same direction is defined as a coil end portion, and a portion where one end of the coil wire path portion transitions to one end of the coil end portion is defined as a coil corner portion,
the stator coil is provided with a plurality of recessed portions that is recessed with respect to a virtual envelope surface including an outer peripheral portion of the coil end portion, an outer peripheral portion of the coil wire path portion, and an outer peripheral portion of the coil corner portion in the spiral coil,
the plurality of recessed portions is located on a coil end side in the spiral coil,
at a bottom of at least one of the plurality of recessed portions, an outer peripheral portion of a coil end portion and an outer peripheral portion of a coil corner portion of an annular body having one turn are located, and
at a bottom of at least another one of the plurality of recessed portions, outer peripheral portions of coil end portions and outer peripheral portions of coil corner portions of annular bodies having a plurality of turns adjacent to each other are located.

Furthermore, another motor at least includes a stator core including a laminated body where a plurality of stator core sheets is laminated, a stator including a stator coil that uses, as a part of a magnetic core, a tooth included in the stator core, and a rotor rotatably supported via a tip of the tooth of the stator core and a void,
wherein the stator coil constitutes a spiral coil including annular bodies having a predetermined number of turns, each of the annular bodies includes a conductive wire portion, the conductive wire portion includes a conductor portion and an insulating coating that covers the conductor portion, the conductor portion has a substantially quadrangular cross-sectional shape, when a part of each of the annular bodies that is located on each of laminating surface sides of the tooth is defined as a coil wire path portion, a portion that is a part of each of the annular bodies and is located between end portions of a pair of the coil wire path portions in a same direction is defined as a coil end portion, and a portion where one end of the coil wire path portion transitions to one end of the coil end portion is defined as a coil corner portion, the stator coil is provided with a plurality of recessed portions that is recessed with respect to a virtual envelope surface including an outer peripheral portion of the coil end portion, an outer peripheral portion of the coil wire path portion, and an outer peripheral portion of the coil corner portion in the spiral coil, the plurality of recessed portions is located on a side of the coil wire path portion in the spiral coil, at a bottom of at least one of the plurality of recessed portions, an outer peripheral portion of a coil wire path portion and an outer peripheral portion of a coil corner portion of an annular body having one turn are located, and
at a bottom of at least another one of the plurality of recessed portions, outer peripheral portions of coil wire path portions and outer peripheral portions of coil corner portions of annular bodies having a plurality of turns adjacent to each other are located.

Furthermore, another motor at least includes a stator core including a laminated body where a plurality of stator core sheets is laminated, a stator including a stator coil that uses, as a part of a magnetic core, a tooth included in the stator core, and a rotor rotatably supported via a tip of the tooth of the stator core and a void,
wherein the stator coil constitutes a spiral coil including annular bodies having a predetermined number of turns, each of the annular bodies includes a conductive wire portion, the conductive wire portion includes a conductor portion and an insulating coating that covers the conductor portion, the conductor portion has a substantially quadrangular cross-sectional shape, when a part of each of the annular bodies that is located on each of laminating surface sides of the tooth is defined as a coil wire path portion, a portion that is a part of each of the annular bodies and is located between end portions of a pair of the coil wire path portions in a same direction is defined as a coil end portion, and a portion where one end of the coil wire path portion transitions to one end of the coil end portion is defined as a coil corner portion, the stator coil is provided with a plurality of recessed portions that is recessed with respect to a virtual envelope surface including an outer peripheral portion of the coil end portion, an outer peripheral portion of the coil wire path portion, and an outer peripheral portion of the coil corner portion in the spiral coil, the plurality of recessed portions is located on a side of the coil wire path portion in the spiral coil, and at a bottom of each of the plurality of recessed portions, outer peripheral portions of coil wire path portions and outer peripheral portions of coil corner portions of annular bodies having a plurality of turns adjacent to each other are located.

Furthermore, another motor at least includes a stator core including a laminated body where a plurality of stator core sheets is laminated, a stator including a stator coil that uses, as a part of a magnetic core, a tooth included in the stator core, and a rotor rotatably supported via a tip of the tooth of the stator core and a void,
wherein the stator coil constitutes a spiral coil including annular bodies having a predetermined number of turns, each of the annular bodies includes a conductive wire portion, the conductive wire portion includes a conductor portion and an insulating coating that covers the conductor portion, the conductor portion has a substantially quadrangular cross-sectional shape,
when a part of each of the annular bodies that is located on each of laminating surface sides of the tooth is defined as a coil wire path portion, a portion that is a part of each of the annular bodies and is located between end portions of a pair of the coil wire path portions in a same direction is defined as a coil end portion, and a portion where one end of the coil wire path portion transitions to one end of the coil end portion is defined as a coil corner portion,
the stator coil is provided with a plurality of recessed portions that is recessed with respect to a virtual envelope surface including an outer peripheral portion of the coil end portion, an outer peripheral portion of the coil wire path portion, and an outer peripheral portion of the coil corner portion in the spiral coil, the plurality of recessed portions is located on a side of the coil wire path portion in the spiral coil, and at a bottom of each of the plurality of recessed portions, an outer peripheral portion of a coil wire path portion and an outer peripheral portion of a coil corner portion of an annular body having one turn are located.

Furthermore, another motor at least includes a stator core including a laminated body where a plurality of stator core sheets is laminated, a stator including a stator coil that uses, as a part of a magnetic core, a tooth included in the stator core, and a rotor rotatably supported via a tip of the tooth of the stator core and a void,
wherein the stator coil constitutes a spiral coil including annular bodies having a predetermined number of turns, each of the annular bodies includes a conductive wire portion, the conductive wire portion includes a conductor portion and an insulating coating that covers the conductor portion, the conductor portion has a substantially quadrangular cross-sectional shape, when a part of each of the annular bodies that is located on each of laminating surface sides of the tooth is defined as a coil wire path portion, a portion that is a part of each of the annular bodies and is located between end portions of a pair of the coil wire path portions in a same direction is defined as a coil end portion, and a portion where one end of the coil wire path portion transitions to one end of the coil end portion is defined as a coil corner portion, the stator coil is provided with a plurality of recessed portions that is recessed with respect to a virtual envelope surface including an outer peripheral portion of the coil end portion, an outer peripheral portion of the coil wire path portion, and an outer peripheral portion of the coil corner portion in the spiral coil, the plurality of recessed portions is located over an outer peripheral surface of the spiral coil, at a bottom of at least one of the plurality of recessed portions, an outer peripheral portion of an annular body having one turn is located, and
at a bottom of at least another one of the plurality of recessed portions, outer peripheral portions of annular bodies having a plurality of turns adjacent to each other are located.

Furthermore, another motor at least includes a stator core including a laminated body where a plurality of stator core sheets is laminated, a stator including a stator coil that uses, as a part of a magnetic core, a tooth included in the stator core, and a rotor rotatably supported via a tip of the tooth of the stator core and a void,
wherein the stator coil constitutes a spiral coil including annular bodies having a predetermined number of turns, each of the annular bodies includes a conductive wire portion, the conductive wire portion includes a conductor portion and an insulating coating that covers the conductor portion, the conductor portion has a substantially quadrangular cross-sectional shape,
when a part of each of the annular bodies that is located on each of laminating surface sides of the tooth is defined as a coil wire path portion, a portion that is a part of each of the annular bodies and is located between end portions of a pair of the coil wire path portions in a same direction is defined as a coil end portion, and a portion where one end of the coil wire path portion transitions to one end of the coil end portion is defined as a coil corner portion,
the stator coil is provided with a plurality of recessed portions that is recessed with respect to a virtual envelope surface including an outer peripheral portion of the coil end portion, an outer peripheral portion of the coil wire path portion, and an outer peripheral portion of the coil corner portion in the spiral coil,
the plurality of recessed portions is located over an outer peripheral surface of the spiral coil, and
at a bottom of each of the plurality of recessed portions, outer peripheral portions of annular bodies having a plurality of turns adjacent to each other are located.

Furthermore, another motor at least includes a stator core including a laminated body where a plurality of stator core sheets is laminated, a stator including a stator coil that uses, as a part of a magnetic core, a tooth included in the stator core, and a rotor rotatably supported via a tip of the tooth of the stator core and a void,
wherein the stator coil constitutes a spiral coil including annular bodies having a predetermined number of turns, each of the annular bodies includes a conductive wire portion, the conductive wire portion includes a conductor portion and an insulating coating that covers the conductor portion, the conductor portion has a substantially quadrangular cross-sectional shape, when a part of each of the annular bodies that is located on each of laminating surface sides of the tooth is defined as a coil wire path portion, a portion that is a part of each of the annular bodies and is located between end portions of a pair of the coil wire path portions in a same direction is defined as a coil end portion, and a portion where one end of the coil wire path portion transitions to one end of the coil end portion is defined as a coil corner portion, the stator coil is provided with a plurality of recessed portions that is recessed with respect to a virtual envelope surface including an outer peripheral portion of the coil end portion, an outer peripheral portion of the coil wire path portion, and an outer peripheral portion of the coil corner portion in the spiral coil, the plurality of recessed portions is located over an outer peripheral surface of the spiral coil, and at a bottom of each of the plurality of recessed portions, an outer peripheral portion of an annular body having one turn is located.

Furthermore, another motor at least includes a stator core including a laminated body where a plurality of stator core sheets is laminated, a stator including a stator coil that uses, as a part of a magnetic core, a tooth included in the stator core, and a rotor rotatably supported via a tip of the tooth of the stator core and a void,
wherein the stator coil constitutes a spiral coil including annular bodies having a predetermined number of turns, each of the annular bodies includes a conductive wire portion, the conductive wire portion includes a conductor portion and an insulating coating that covers the conductor portion, the conductor portion has a substantially quadrangular cross-sectional shape,
when a part of each of the annular bodies that is located on each of laminating surface sides of the tooth is defined as a coil wire path portion, a portion that is a part of each of the annular bodies and is located between end portions of a pair of the coil wire path portions in a same direction is defined as a coil end portion, and a portion where one end of the coil wire path portion transitions to one end of the coil end portion is defined as a coil corner portion, the stator coil is provided with one recessed portion or a plurality of the recessed portions that is recessed with respect to a virtual envelope surface including an outer peripheral portion of the coil end portion, an outer peripheral portion of the coil wire path portion, and an outer peripheral portion of the coil corner portion in the spiral coil, the plurality of recessed portions is located over an outer peripheral surface of the spiral coil, at a bottom of at least one of the plurality of recessed portions, an outer peripheral portion of an annular body having one turn is located,
at a bottom of at least another one of the plurality of recessed portions, outer peripheral portions of annular bodies having a plurality of turns adjacent to each other are located,
at least still another one of the plurality of recessed portions is a groove-shaped recessed portion that communicates from a start turn to an end turn out of the predetermined number of turns, and longitudinal directions of groove shapes of different recessed portions out of the plurality of recessed portions intersect with each other.

Furthermore, another motor at least includes a stator core including a laminated body where a plurality of stator core sheets is laminated, a stator including a stator coil that uses, as a part of a magnetic core, a tooth included in the stator core, and a rotor rotatably supported via a tip of the tooth of the stator core and a void,
wherein the stator coil constitutes a spiral coil including annular bodies having a predetermined number of turns, each of the annular bodies includes a conductive wire portion, the conductive wire portion includes a conductor portion and an insulating coating that covers the conductor portion, the conductor portion has a substantially quadrangular cross-sectional shape, and when a part of each of the annular bodies that is located on each of laminating surface sides of the tooth is defined as a coil wire path portion, a portion that is a part of each of the annular bodies and is located between end portions of a pair of the coil wire path portions in a same direction is defined as a coil end portion, and a portion where one end of the coil wire path portion transitions to one end of the coil end portion is defined as a coil corner portion, the stator coil forms, as a ridge line, central portions of coil end portions from a start turn to an end turn out of the predetermined number of turns, and is provided with slopes inclined downward from the ridge line to each coil corner portion, in a virtual envelope surface including an outer peripheral portion of the coil end portion, an outer peripheral portion of the coil wire path portion, and an outer peripheral portion of the coil corner portion in the spiral coil.

Furthermore, another motor further includes one recessed portion or a plurality of the recessed portions that is recessed with respect to the virtual envelope surface,
wherein
the plurality of recessed portions is located on a side of the coil end portion of the spiral coil, at a bottom of at least one of the plurality of recessed portions, an outer peripheral portion of a coil end portion and an outer peripheral portion of a coil corner portion of an annular body having one turn are located, and
at a bottom of at least one of the plurality of recessed portions, outer peripheral portions of coil end portions and outer peripheral portions of coil corner portions of annular bodies having a plurality of turns adjacent to each other are located.

Furthermore, a motor according to still another mode of the present invention further includes one recessed portion or a plurality of the recessed portions that is recessed with respect to the virtual envelope surface, wherein the plurality of recessed portions is located on a side of the coil wire path portion of the spiral coil, at a bottom of at least one of the plurality of recessed portions, an outer peripheral portion of a coil wire path portion and an outer peripheral portion of a coil corner portion of an annular body having one turn are located, and
at a bottom of at least one of the plurality of recessed portions, outer peripheral portions of coil wire path portions and outer peripheral portions of coil corner portions of annular bodies having a plurality of turns adjacent to each other are located.

Furthermore, in another motor, a plurality of recessed portions is located over an outer peripheral surface of the spiral coil, at a bottom of at least one of the plurality of recessed portions, an outer peripheral portion of an annular body having one turn is located, and
at a bottom of at least one of the plurality of recessed portions, outer peripheral portions of annular bodies having a plurality of turns adjacent to each other are located.

Furthermore, another motor at least includes a stator core including a mode of a laminated body where a plurality of stator core sheets is laminated, a stator including a stator coil that uses, as a part of a magnetic core, a tooth included in the stator core, and a rotor rotatably supported via a tip of the tooth of the stator core and a void,
wherein
the stator coil constitutes a spiral coil including annular bodies having a predetermined number of turns, each of the annular bodies includes a conductive wire portion, the conductive wire portion includes a conductor portion and an insulating coating that covers the conductor portion, the conductor portion has a substantially quadrangular cross-sectional shape, a part of each of the annular bodies that is located on each of laminating surface sides of the tooth is defined as a coil wire path portion, a portion that is a part of each of the annular bodies and is located between end portions of a pair of the coil wire path portions in a same direction is defined as a coil end portion, a portion where one end of the coil wire path portion transitions to one end of the coil end portion is defined as a coil corner portion, the stator coil is provided with at least one recessed portion that is recessed with respect to a virtual envelope surface including an outer peripheral portion of the coil end portion, an outer peripheral portion of the coil wire path portion, and an outer peripheral portion of the coil corner portion in the spiral coil, and
the stator coil has a void between an inner peripheral edge portion of any of the annular bodies and the magnetic core.

Furthermore, another motor at least includes a stator core including a laminated body where a plurality of stator core sheets is laminated, a stator including a stator coil that uses, as a part of a magnetic core, a tooth included in the stator core, and a rotor rotatably supported via a tip of the tooth of the stator core and a void,
wherein
the stator coil constitutes a spiral coil including annular bodies having a predetermined number of turns, each of the annular bodies includes a conductive wire portion, the conductive wire portion includes a conductor portion and an insulating coating that covers the conductor portion, the conductor portion has a substantially quadrangular cross-sectional shape, a part of each of the annular bodies that is located on each of laminating surface sides of the tooth is defined as a coil wire path portion, a portion that is a part of each of the annular bodies and is located between end portions of a pair of the coil wire path portions in a same direction is defined as a coil end portion, a portion where one end of the coil wire path portion transitions to one end of the coil end portion is defined as a coil corner portion, the stator coil is provided with at least one recessed portion that is recessed with respect to a virtual envelope surface including an outer peripheral portion of the coil end portion, an outer peripheral portion of the coil wire path portion, and an outer peripheral portion of the coil corner portion in the spiral coil, and
the stator coil has a void between inner peripheral edge portions of a plurality of annular bodies out of the annular bodies and the magnetic core, the plurality of annular bodies being located on a side of the tip of the tooth.

According to the present invention, it is possible to efficiently circulate a refrigerant, oil, air, or the like throughout the stator coil of the motor, and it is also possible to enhance the cooling effect. Therefore, it is possible to implement the highly efficient motor.

### BRIEF DESCRIPTION OF DRAWINGS

FIG. 1A is a top view illustrating a motor according to a first exemplary embodiment.
FIG. 1B is a side view illustrating the motor according to the first exemplary embodiment.
FIG. 1C is a cross-sectional view taken along line 1C-1C in FIG. 1B.
FIG. 2 is a perspective view illustrating a stator coil according to the first exemplary embodiment.
FIG. 3 is a perspective view illustrating a stator coil according to a second exemplary embodiment.
FIG. 4 is a perspective view illustrating a stator coil according to a third exemplary embodiment.
FIG. 5 is a perspective view illustrating a stator coil according to a fourth exemplary embodiment.
FIG. 6 is a perspective view illustrating a stator coil according to a fifth exemplary embodiment.
FIG. 7 is a perspective view illustrating a stator coil according to a sixth exemplary embodiment.
FIG. 8 is a perspective view illustrating a stator coil according to a seventh exemplary embodiment.
FIG. 9 is a perspective view illustrating a stator coil according to an eighth exemplary embodiment.
FIG. 10A is a cross-sectional view illustrating stator coils according to a ninth exemplary embodiment.
FIG. 10B is a cross-sectional view illustrating other stator coils according to the ninth exemplary embodiment.
FIG. 10C is a cross-sectional view illustrating other stator coils according to the ninth exemplary embodiment.
FIG. 10D is a cross-sectional view illustrating other stator coils according to the ninth exemplary embodiment.
FIG. 10E is a cross-sectional view illustrating other stator coils according to the ninth exemplary embodiment.
FIG. 10F is a cross-sectional view illustrating other stator coils according to the ninth exemplary embodiment.
FIG. 11A is a perspective view illustrating a stator coil of a conventional example.
FIG. 11B is a cross-sectional view illustrating stator coils of the conventional example.

### DESCRIPTION OF EMBODIMENTS

Hereinafter, a motor of the present invention will be described in detail with reference to the drawings. The description of preferred exemplary embodiments below is merely exemplary in nature and is not intended to limit the present invention, applications of the present invention, or uses of the present invention.

### (First exemplary embodiment)

### [About motor structure]

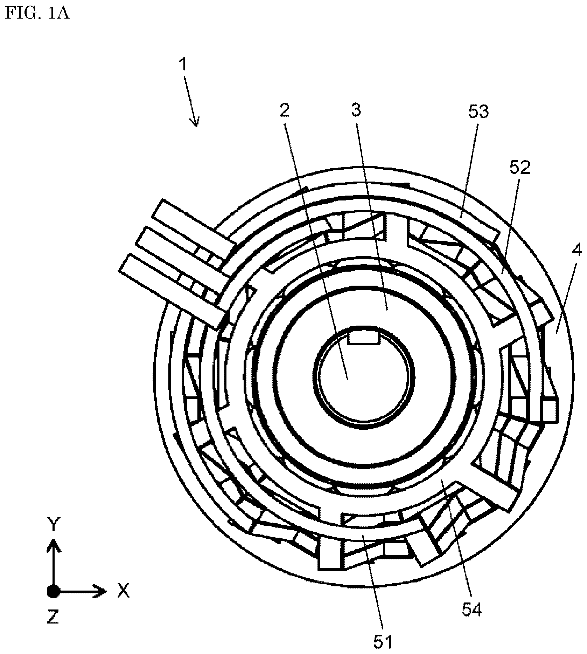

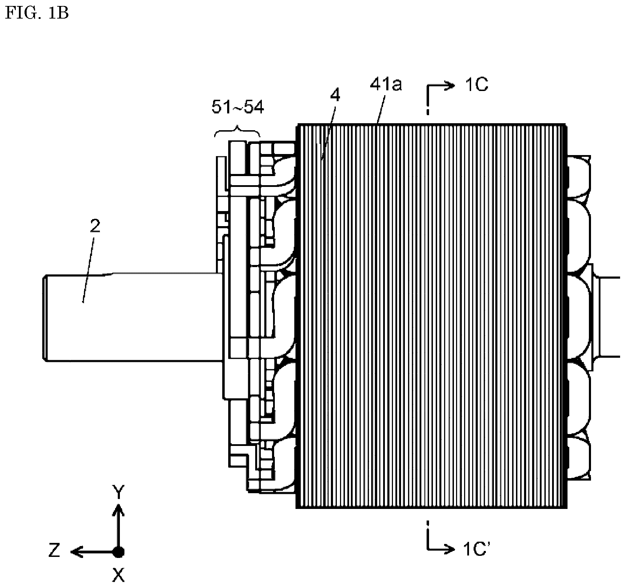

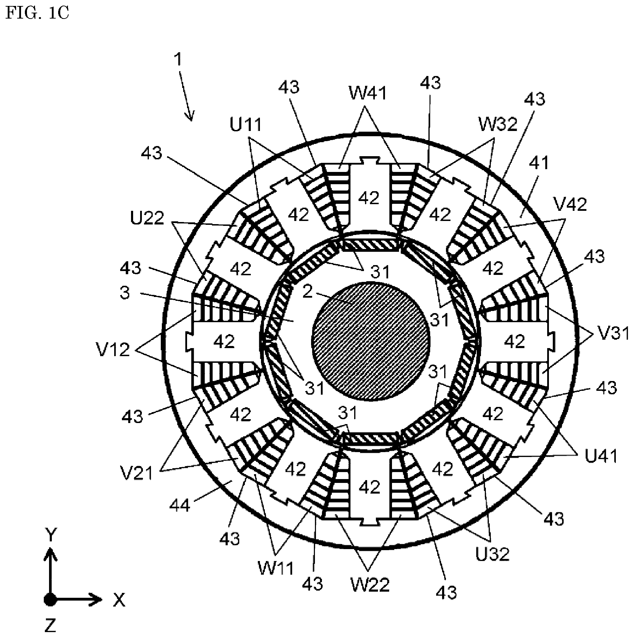

FIG. 1A is a top view illustrating motor 1 according to a first exemplary embodiment. FIG. 1B is a side view illustrating motor 1 according to the first exemplary embodiment. FIG. 1C is a cross-sectional view taken along line 1C-1C in FIG. 1B. However, in any of the drawings, insulating materials such as a cover case and an insulator are not illustrated. Motor 1 includes, inside the cover case (not illustrated), shaft 2, rotor 3, stator 4, the insulator (not illustrated), and stator coils U11, U22, U32, U41, V12, V21, V31, V42, W11, W22, W32, W41, and bus bars 51 to 54.

A longitudinal direction of shaft 2 (direction perpendicular to a paper surface of FIG. 1A) is referred to as a Z-axis direction, and directions orthogonal to the Z-axis direction (directions parallel to the paper surface of FIG. 1A) are referred to as an X-axis direction and a Y-axis direction. The X-axis direction and the Y-axis direction are orthogonal.

"Integrated" or "integration" means a state of one object in which a plurality of parts is electrically connected, or a state of one object in which the plurality of parts is bonded with a material bond by melting or the like to be electrically connected, and the plurality of entire parts is not only mechanically connected by bolting, caulking, or the like, but also bonded with the material bond such as covalent bond, ionic bond, or metal bond.

Rotor 3 is provided in contact with an outer circumference of shaft 2, and includes magnets 31 facing stator 4 and having N poles and S poles alternately arranged along an outer circumferential direction of shaft 2. Although neodymium magnets are used as magnets 31 in the present exemplary embodiment, a material, a shape, or stuff of magnets 31 can be appropriately changed in accordance with an output of the motor or the like.

Stator 4 includes substantially annular stator core 41, a plurality of teeth 42 provided at equal intervals along an inner circumference of stator core 41, and slots 43 each provided between teeth 42. Stator 4 is arranged on an outer side of rotor 3 in a separate manner with a certain distance from rotor 3 when viewed from the Z-axis direction.

Stator core 41 is formed as an aggregate of a plurality of core segments. A mode of the core segments in the present exemplary embodiment is a mode of including yoke 44 and the plurality of teeth 42. Note that, as the mode of the core segments, a suitable mode other than the example illustrated in the present exemplary embodiment can be appropriately selected. For example, although yoke 44 of the present exemplary embodiment has a single annular shape, a mode may be adopted in which a plurality of fan-shaped core segments is formed and the plurality of fan-shaped core segments is arranged in an annular shape. Furthermore, stator core 41 and the core segments are each a laminated body formed by laminating a plurality of core sheets (stator core sheets 41a) to be integrated. Each of the plurality of core sheets is formed by blanking an electromagnetic steel sheet containing silicon or the like into a predetermined shape.

Note that, in the present exemplary embodiment, a number of magnetic poles of rotor 3 is 10 in total, which include five N poles and five S poles facing stator 4, and a number of slots 43 is 12. However, the present invention is not particularly limited to this, and other combinations of the number of magnetic poles and the number of slots are applicable.

Furthermore, stator 4 includes 12 stator coils U11, U22, U32, U41, V12, V21, V31, V42, W11, W22, W32, W41. These stator coils are mounted on teeth 42 and are arranged in slots 43 when viewed from the Z-axis direction. That is, stator coils U11, U22, U32, U41, V12, V21, V31, V42, W11, W22, W32, W41 are wound around teeth 42 in a concentrated manner. Furthermore, stator coils U11, U22, U32, U41 are arranged integrally with bus bar 51, stator coils V12, V21, V31, V42 are arranged integrally with bus bar 52, and stator coils W11, W22, W32, W41 are arranged integrally with bus bar 53. The bus bar may be formed but is not necessary, and connection may be established by a wiring substrate or a lead wire.

Here, first characters of reference marks UXY, VXY, and WXY representing the stator coils represents phases of motor 1 (in the present exemplary embodiment, a U-phase, a V-phase, and a W-phase). Second characters represent arrangement orders of the stator coils in the same phase. Third characters represent winding directions of spiral coils, which are the stator coils, and in the present exemplary embodiment, a character "1" represents a clockwise direction and a character "2" represents a counterclockwise direction. Therefore, stator coil U11 represents that stator coil U11 is a first stator coil in the arrangement order in the U-phase and the winding direction is the clockwise direction. Stator coil V42 represents that stator coil V42 is a fourth stator coil in the arrangement order in the V-phase and the winding direction is the counterclockwise direction. Note that the "clockwise direction" means a clockwise direction when viewed from a center of motor 1, and the "counterclockwise direction" means a counterclockwise direction when viewed from the center of motor 1.

In addition, strictly speaking, stator coils U11, U41 are U-phase stator coils, and stator coils U22, U32 are U-bar phase (where a direction of a magnetic field generated is opposite to that of the U-phase stator coil) stator coils. However, in the following description, unless otherwise specified, stator coils U11, U22, U32, U41 are collectively referred to as U-phase stator coils. Similarly, stator coils V12, V21, V31, V42 and stator coils W11, W22, W32, W41 are also collectively referred to as V-phase stator coils and W-phase stator coils, respectively.

### [About stator coil structure]

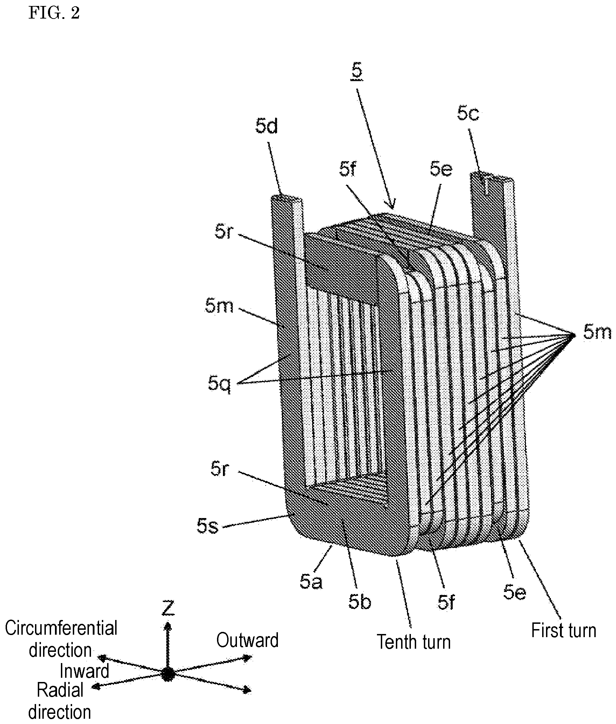

FIG. 2 is a perspective view illustrating stator coil 5 according to the first exemplary embodiment. Stator coil 5 is applied to stator coils U11, U22, U32, U41, V12, V21, V31, V42, W11, W22, W32, W41 mounted on teeth 42 of motor 1 illustrated in FIG. 1C. Stator coil 5 has a spiral structure including annular bodies 5m having a predetermined number of turns. Annular bodies 5m have a mode in which the spiral coil having a laminated structure is formed. As illustrated in FIG. 2, a mode of each turn of annular bodies 5m is substantially rectangular in a plan view. Along side of a short shape of each of annular bodies 5m in a plan view is located on each of laminating surface sides of a tooth, and is referred to as coil wire path portion 5q. A short side of the short shape of each of annular bodies 5m in a plan view is located between end portions of coil wire path portions 5q, which are a pair of the long sides, in the same direction, and is referred to as coil end portion 5r. Furthermore, a portion where one end of coil wire path portion 5q transition to one end of coil end portions 5r is referred to as coil corner portion 5s.

Stator coil 5, which is the spiral coil, includes conductive wire portion 5a, insulating coating 5b provided on a surface of conductive wire portion 5a, and lead-out portion 5c and lead-out portion 5d that are led out from a first turn and a tenth turn of stator coil 5, respectively. Annular bodies 5m that are a second turn to the tenth turn of stator coil 5 each have a substantially rectangular annular mode in a plan view. Each of annular bodies 5m that are the second turn to the tenth turn of stator coil 5 has two short sides, two long sides, and four coil corner portions 5s. Note that, in FIG. 2, each of annular bodies 5m from the first turn to a ninth turn has a mode of making one round in an annular shape. The tenth turn has a mode in which the annular shape is less than one round and one short side of annular body 5m lacks. If this mode is expressed by another expression, the tenth turn has a mode in which the annular shape is less than one round by about a quarter round, and is substantially a three-quarter round (3/4 rounds). The reason why the tenth turn is less than one round by about a quarter round is due to an arrangement mode of lead-out portion 5c and lead-out portion 5d. Depending on the arrangement of lead-out portion 5c and lead-out portion 5d, it may be considered that the tenth turn makes one round or makes a round slightly more than one round. Similarly, the first turn may be less than one round or make a round slightly more than one round.

Conductive wire portion 5a includes a conductor having a quadrangular cross section and insulating coating 5b that covers the conductor. Conductive wire portion 5a is a structure in which annular structures are laminated in a spiral shape. A mode of laminating the annular structures in a spiral shape is a structure of laminating the annular structures in a radially inward/outward direction of the motor, and includes annular bodies 5m having the predetermined number of turns. For example, the predetermined number of turns includes the first turn to an nth turn (n is an integer of 2 or more). Note that the first turn to the nth turn are referred to as turn rows.

Conductive wire portion 5a is a wire material made of a conductive member having a substantially quadrangular cross section, and forms the turn rows in which single-layer annular bodies 5m having 10 turns are laminated in a spiral shape. Conductive wire portion 5a is formed of, for example, copper, aluminum, zinc, magnesium, brass, iron, steel use stainless (SUS), or the like. Although conductive wire portion 5a is described as a single-layer coil, not only the single-layer coil but also a multi-layer coil is applicable.

Note that, in the following description, a part wound from a tip of lead-out portion 5c to a downward position of a position where lead-out portion 5d is provided is referred to as the first turn, and parts following the first turn, which are each wound by one round, are sequentially referred to as the second turn, a third turn,... the tenth turn. A start point of each turn can be set arbitrarily. A side of stator coil 5 where the first turn is provided is referred to as "outside", and a side where the tenth turn is provided is referred to as "inside". This is because an outer side of the motor is "outside" and a center side of the motor is "inside" with respect to a radial direction of a motor structure.

Insulating coating 5b is provided on the entire surface of conductive wire portion 5a so as to insulate stator coil 5 from an external member (not illustrated). For example, in motor 1 illustrated in FIGS. 1A, 1B and 1C, insulating coating 5b and an insulating member (not illustrated) such as insulating paper insulate stator coil 5 from stator core 41 and tooth 42. Adjacent turns of stator coil 5 are insulated by insulating coating 5b. Insulating coating 5b is formed of, for example, polyimide, nylon, polyether ether ketone (PEEK), acrylic, amide imide, ester imide, enamel, or heat resistant resin. Insulating coating 5b has a thickness of about several tens of pm, for example, 5 pm to 50 pm.

Lead-out portion 5c and lead-out portion 5d are each a part of conductive wire portion 5a. Lead-out portion 5c and lead-out portion 5d extend outward from a side surface of stator coil 5, in other words, from a plane intersecting the turn rows of conductive wire portion 5a, to receive current supply from an outside or to supply a current to the outside. Insulating coating 5b is removed in lead-out portion 5c and lead-out portion 5d in order to connect to an external member, for example, any of bus bar 51, bus bar 52, bus bar 53, or bus bar 54. Insulating coating 5b does not need to be removed in entire regions of lead-out portion 5c and lead-out portion 5d. For example, it is sufficient that insulating coating 5b is removed only in portions necessary for connection with bus bar 51, bus bar 52, bus bar 53, or bus bar 54.

Characteristics of a shape of the stator coil according to the present exemplary embodiment will be described with reference to the drawings.

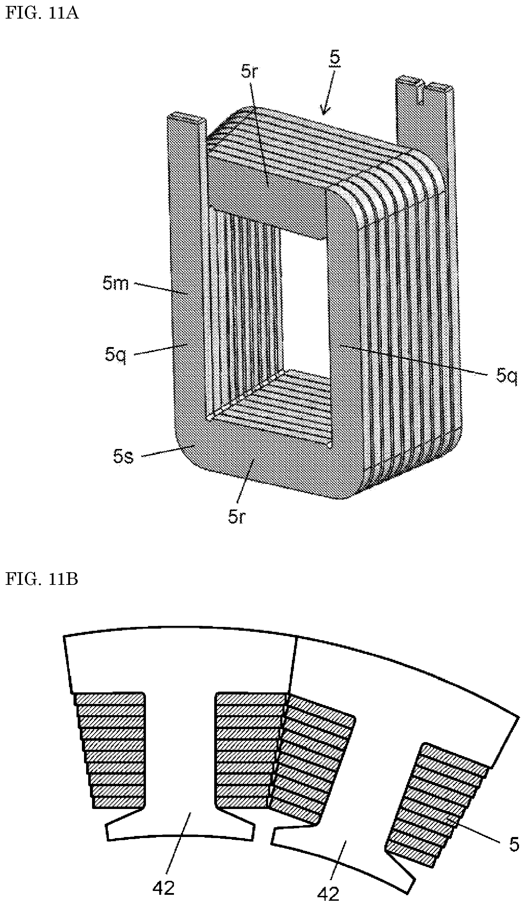

FIG. 11A is a perspective view illustrating a stator coil of a conventional example. FIG. 11B is a cross-sectional view illustrating stator coils of the conventional example. Here, since the stator coils are neatly aligned and a large cross-sectional area of a copper material can be secured, copper loss can be reduced. However, as for cooling from the outside with air, a refrigerant, oil, or the like, there is a problem that an effect is limited because a gap between the stator coils or an area in contact with a cooling material is small.

Meanwhile, as illustrated in FIG. 2, in the present exemplary embodiment, stator coil 5, which is the spiral coil, has a mode in which a plurality of recessed portions is provided. The plurality of recessed portion is recessed with respect to a virtual envelope surface including each of outer peripheral portions of coil end portions 5r, each of outer peripheral portions of coil wire path portions 5q, and each of outer peripheral portions of coil corner portions 5s. Positions where the plurality of recessed portions is arranged are sides of coil end portions 5r that are the short sides of stator coil 5, in stator coil 5, which is the spiral coil.

At a bottom of recessed portion 5e, which is one of the plurality of recessed portions, an outer peripheral portion of coil end portion 5r and an outer peripheral portion of coil corner portion 5s of an annular body having one turn are located.

At a bottom of recessed portion 5f, which is another one of the plurality of recessed portions, outer peripheral portions of coil end portions 5r and outer peripheral portions of coil corner portions 5s of annular bodies having a plurality of turns adjacent to each other are located.

Furthermore, modes of recessed portion 5e and recessed portion 5f will be described below by expressions different from the above. In annular bodies 5m illustrated in FIG. 2, when a width from an inner peripheral edge to an outer peripheral edge of an annular body in coil end portion 5r or coil wire path portion 5q is a stator coil width, a stator coil width in recessed portion 5e and recessed portion 5f is narrower than a stator coil width of an annular body of a turn adjacent to recessed portion 5e and recessed portion 5f. Specifically, the stator coil width in recessed portion 5e and recessed portion 5f has a width about 1/5 to 1/2 narrower than the stator coil width of the annular body of the turn adjacent to recessed portion 5e and recessed portion 5f. Furthermore, in accordance with the mode of narrowing the stator coil width, a mode of coil corner portion 5s in recessed portion 5e and recessed portion 5f adopts a suitable shape that does not hinder a flow of air or a refrigerant.

Note that the stator coil width in recessed portion 5e and recessed portion 5f is not limited to the mode of having the width about 1/5 to 1/2 narrower than the stator coil width of the annular body of the turn adjacent to recessed portion 5e and recessed portion 5f. A suitable stator coil width can be selected in consideration of matters such as a decrease in rigidity of the stator coil and an increase in Joule heat due to an increase in resistance in the conductor portion of the stator coil.

In a shape illustrated in FIG. 2, a mode is adopted in which recessed portion 5e and recessed portion 5f are arranged in each of an upper portion and a lower portion, which are coil ends of stator coil 5, but the present invention is not limited to this mode, and a mode in which recessed portion 5e or recessed portion 5f is arranged in every other turn may be adopted. In some cases, the mode in which the recessed portions are arranged in every other turn may be more effective in increasing a surface area of the stator coil, and a cooling effect may be enhanced because flow paths for air, a refrigerant, or the like can be secured.

A shape of coil corner portion 5s illustrated in FIG. 2 is greatly affected by processing accuracy of annular body 5m itself in stator coil 5. Therefore, an R chamfering, a C chamfering, or the like may be arranged on the outer peripheral portion of coil corner portion 5s. By arranging the R chamfering, the C chamfering, or the like, an outer peripheral portion of annular body 5m may have a polygonal shape or a shape having R portions at four corners in a plan view.

Also for an inner peripheral portion of coil corner portion 5s illustrated in FIG. 2, a mode in which a fine relief groove is arranged may be adopted from a viewpoint of workability in processing annular body 5m itself in stator coil 5.

In the present exemplary embodiment, the number of turns of stator coil 5 is 10. However, the number of turns is not particularly limited to this, and another value may be used.

As described above, motor 1 of the present exemplary embodiment at least includes stator core 41 including a laminated body where a plurality of stator core sheets 41a is laminated, stator 4 including stator coil 5 that uses, as a part of a magnetic core, tooth 42 included in stator core 41, and rotor 3 rotatably supported via a tip of tooth 42 of stator core 41 and a void. Stator coil 5 constitutes a spiral coil including annular bodies 5m having a predetermined number of turns, each of annular bodies 5m includes conductive wire portion 5a, conductive wire portion 5a includes a conductor portion and insulating coating 5b that covers the conductor portion, the conductor portion has a substantially quadrangular cross-sectional shape, a part of each of annular bodies 5m that is located on each of laminating surface sides of tooth 42 is defined as coil wire path portion 5q, a portion that is a part of each of annular bodies 5m and is located between end portions of a pair of coil wire path portions 5q in the same direction is defined as coil end portion 5r, a portion where one end of coil wire path portion 5q transitions to one end of coil end portion 5r is defined as coil corner portion 5s, and stator coil 5 is provided with at least one recessed portion 5e, 5f that is recessed with respect to a virtual envelope surface including an outer peripheral portion of coil end portion 5r, an outer peripheral portion of coil wire path portion 5q, and an outer peripheral portion of coil corner portion 5s in the spiral coil.

According to the present exemplary embodiment, the stator coil in the motor of the present invention has a structure that increases a heat dissipation area for air, a refrigerant, oil, or the like, as compared with the stator coil illustrated as the conventional example. Furthermore, the structure is such that the circulation passages for air, a refrigerant, oil, or the like are increased. This structure makes it possible to efficiently enhance the cooling effect for the stator coil. Therefore, it is possible to implement the highly efficient motor.

### (Second exemplary embodiment)

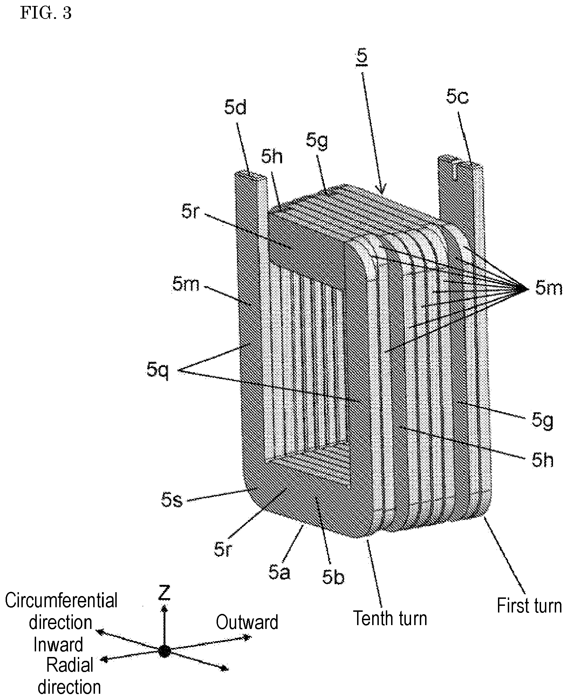

FIG. 3 is a perspective view illustrating stator coil 5 according to a second exemplary embodiment. A configuration of a motor of the second exemplary embodiment is similar to that of the first exemplary embodiment, and the description of overlapping contents will be omitted.

As illustrated in FIG. 3, in the present exemplary embodiment, stator coil 5, which is a spiral coil, is provided with a plurality of recessed portions including recessed portion 5g and recessed portion 5h. The plurality of recessed portions is recessed with respect to a virtual envelope surface including an outer peripheral portion of coil end portion 5r, an outer peripheral portion of coil wire path portion 5q, and an outer peripheral portion of coil corner portion 5s. Positions where the plurality of recessed portions is arranged are sides of coil wire path portions 5q that are the long sides of stator coil 5, in stator coil 5, which is the spiral coil.

A mode is included in which, at a bottom of recessed portion 5g, which is one of the plurality of recessed portions, an outer peripheral portion of coil wire path portion 5q and an outer peripheral portion of coil corner portion 5s of an annular body having one turn are located.

A mode is adopted in which, at a bottom of recessed portion 5h, which is another one of the plurality of recessed portions, outer peripheral portions of coil wire path portions 5q and outer peripheral portions of coil corner portions 5s of annular bodies having a plurality of turns adjacent to each other are located.

The modes of recessed portion 5g and recessed portion 5h will be described below by expressions different from the above. That is, in annular bodies 5m illustrated in FIG. 3, when a width from an inner peripheral edge to an outer peripheral edge of an annular body in coil end portion 5r or coil wire path portion 5q is a stator coil width, a stator coil width in recessed portion 5g and recessed portion 5h is narrower than a stator coil width of an annular body of a turn adjacent to recessed portion 5g and recessed portion 5h. Specifically, the stator coil width in recessed portion 5g and recessed portion 5h has a width about 1/5 to 1/2 narrower than the stator coil width of the annular body of the turn adjacent to recessed portion 5g and recessed portion 5h. In accordance with the mode of narrowing the stator coil width, a mode of coil corner portion 5s in recessed portion 5g and recessed portion 5h adopts a suitable shape that does not hinder a flow of air or a refrigerant.

The stator coil width in recessed portion 5g and recessed portion 5h is not limited to the mode of having the width about 1/5 to 1/2 narrower than the stator coil width of the annular body of the turn adjacent to recessed portion 5g and recessed portion 5h. A suitable stator coil width can be selected in consideration of matters such as a decrease in rigidity of the stator coil and an increase in Joule heat due to an increase in resistance in the conductor portion of the stator coil.

In a shape illustrated in FIG. 3, a mode is adopted in which recessed portion 5g and recessed portion 5h are arranged in each side of coil wire path portions 5q on the long sides of stator coil 5. However, the present invention is not limited to this mode, and a mode in which recessed portion 5g or recessed portion 5h is arranged in every other turn may be adopted. In some cases, the mode in which the recessed portions are arranged in every other turn may be more effective in increasing a surface area of the stator coil. This mode can secure a flow path for air, a refrigerant, or the like. Therefore, a cooling effect may be enhanced.

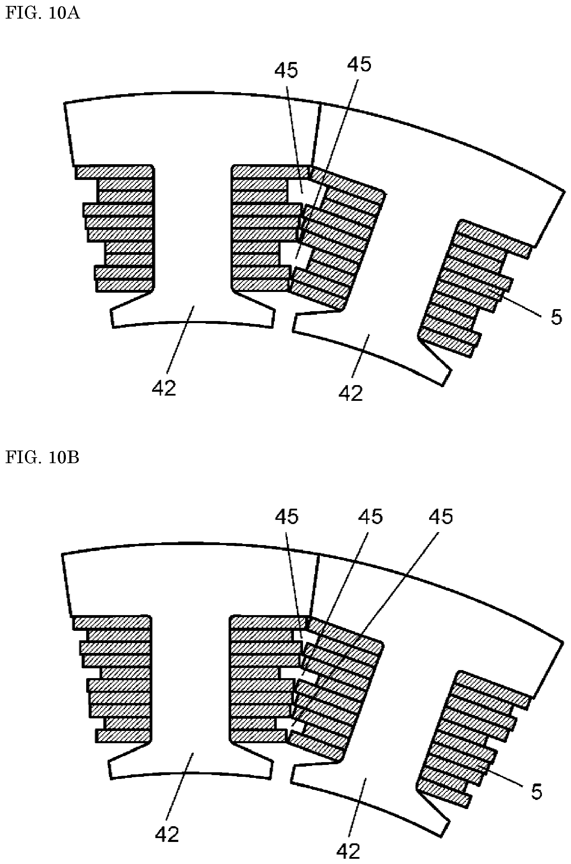

In the present exemplary embodiment, as illustrated in FIG. 10A, a mode may be adopted in which, at a bottom of each of the plurality of recessed portions, outer peripheral portions of coil wire path portions 5q and outer peripheral portions of coil corner portions 5s included in annular bodies having a plurality of turns adjacent to each other are located.

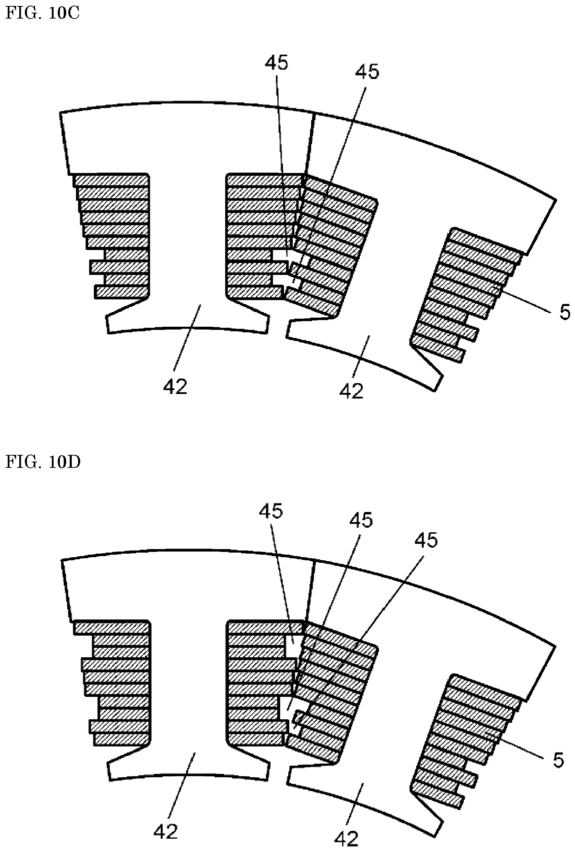

In the present exemplary embodiment, as illustrated in FIGS. 10B and 10C, a mode may be adopted in which, at the bottom of each of the plurality of recessed portions, an outer peripheral portion of coil wire path portion 5q and an outer peripheral portion of coil corner portion 5s included in an annular body having one turn are located.

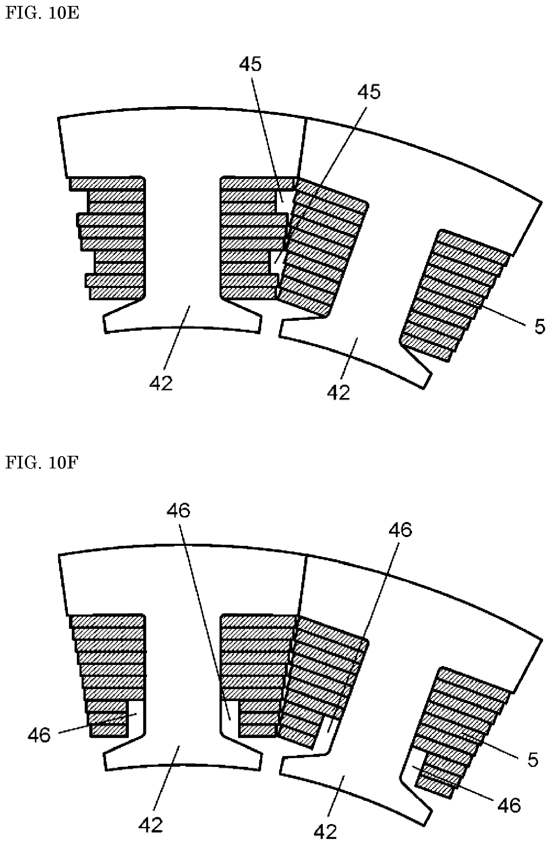

The present exemplary embodiment may include a mode in which a plurality of recessed portions illustrated in FIG. 10D, FIG. 10E, or FIG. 10F are arranged.

Since a shape of coil corner portion 5s illustrated in FIG. 3 is greatly affected by processing accuracy of annular body 5m itself in stator coil 5, an R chamfer, a C chamfer, or the like may be arranged on the outer peripheral portion of coil corner portion 5s. By arranging the R chamfering, the C chamfering, or the like, an outer peripheral portion of annular body 5m may have a polygonal shape or a shape having R portions at four corners in a plan view.

Also for an inner peripheral portion of coil corner portion 5s illustrated in FIG. 3, a mode in which a fine relief groove is arranged may be adopted from a viewpoint of workability in processing annular body 5m itself in stator coil 5.

In the present exemplary embodiment, the number of turns of stator coil 5 is 10. However, the number of turns is not particularly limited to this, and another value may be used. Note that the number of turns of stator coil 5 illustrated in the drawing is a value that is slightly less than 10, if described correctly. Stator coil 5 illustrated in the drawing has a mode in which each of annular bodies 5m from a first turn to a ninth turn makes one round in an annular shape. On the other hand, a tenth turn has a mode in which the annular shape is less than one round and about one short side of annular body 5m lacks. If this mode is expressed by another expression, the tenth turn has a mode in which the annular shape is less than one round by about a quarter round, and is substantially a three-quarter round (3/4 rounds). The reason why the tenth turn is less than one round by about a quarter round is due to an arrangement mode of lead-out portion 5c and lead-out portion 5d. Depending on positions of the arrangement of lead-out portion 5c and lead-out portion 5d, it may be considered that the tenth turn makes one round or makes a round slightly more than one round. Similarly, a case where the first turn is less than one round or makes a round slightly more than one round may be considered.

As described above, motor 1 of the present exemplary embodiment at least includes stator core 41 including a laminated body where a plurality of stator core sheets 41a is laminated, stator 4 including stator coil 5 that uses, as a part of a magnetic core, tooth 42 included in stator core 41, and a rotor rotatably supported via a tip of tooth 42 of stator core 41 and a void. Stator coil 5 constitutes a spiral coil including annular bodies 5m having a predetermined number of turns, each of the annular bodies includes conductive wire portion 5a, conductive wire portion 5a includes a conductor portion and insulating coating 5b that covers the conductor portion, the conductor portion has a substantially quadrangular cross-sectional shape, and when a part of each of annular bodies 5m that is located on each of laminating surface sides of tooth 42 is defined as coil wire path portion 5q, a portion that is a part of each of annular bodies 5m and is located between end portions of a pair of coil wire path portions 5q in the same direction is defined as coil end portion 5r, and a portion where one end of coil wire path portion 5q transitions to one end of coil end portion 5r is defined as coil corner portion 5s, stator coil 5 is provided with a plurality of recessed portions 5g, 5h that is recessed with respect to a virtual envelope surface including an outer peripheral portion of coil end portion 5r, an outer peripheral portion of coil wire path portion 5q, and an outer peripheral portion of coil corner portion 5s in the spiral coil. The plurality of recessed portions 5g, 5h is located on a side of coil wire path portion 5q in the spiral coil, and at a bottom of at least one of the plurality of recessed portions 5g, 5h, an outer peripheral portion of coil wire path portion 5q and an outer peripheral portion of coil corner portion 5s of an annular body having one turn are located. In addition, at a bottom of at least another one of the plurality of recessed portions 5g, 5h, outer peripheral portions of coil wire path portions 5q and outer peripheral portions of coil corner portions 5s of annular bodies 5m having a plurality of turns adjacent to each other are located.

As described above, according to the present exemplary embodiment, the stator coil in the motor of the present invention has a structure that increases a heat dissipation area for air, a refrigerant, oil, or the like, as compared with a stator coil illustrated as the conventional example. Furthermore, the structure is such that the circulation passages for air, a refrigerant, oil, or the like are increased. This structure makes it possible to efficiently enhance the cooling effect for the stator coil. Therefore, it is possible to implement the highly efficient motor. In addition, fluid such as air, a refrigerant, or oil passes from an upstream side of a flow to a downstream side of the flow through a gap (oil passage) near the stator coil, and further, a circulation is smoothed, so that a heat dissipation effect can be enhanced.

### (Third exemplary embodiment)

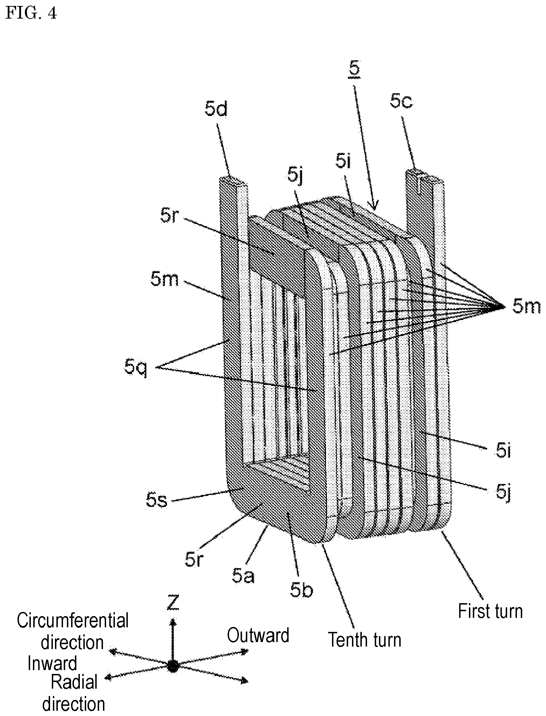

FIG. 4 is a perspective view illustrating stator coil 5 according to a third exemplary embodiment. A configuration of a motor of the third exemplary embodiment is similar to that of the first exemplary embodiment, and the description of overlapping contents will be omitted.

As illustrated in FIG. 4, in the present exemplary embodiment, stator coil 5, which is a spiral coil, has a mode in which a plurality of recessed portions is provided. The plurality of recessed portions is recessed with respect to a virtual envelope surface including an outer peripheral portion of coil end portion 5r, an outer peripheral portion of coil wire path portion 5q, and an outer peripheral portion of coil corner portion 5s. That is, in stator coil 5, which is the spiral coil, positions where the plurality of recessed portions is arranged extend over entire circumferences of an outer peripheral surface of stator coil 5.

At a bottom of recessed portion 5i, which is one of the plurality of recessed portions, an outer peripheral portion of coil wire path portion 5q, an outer peripheral portion of coil end portion 5r, and an outer peripheral portion of coil corner portion 5s of an annular body having one turn are located.

At a bottom of recessed portion 5j, which is another one of the plurality of recessed portions, outer peripheral portions of coil wire path portions 5q, outer peripheral portions of coil end portions 5r, and outer peripheral portions of coil corner portions 5s of annular bodies having a plurality of turns adjacent to each other are located.

Modes of recessed portion 5i and recessed portion 5j will be described below by expressions different from the above. That is, in annular bodies 5m illustrated in FIG. 4, when a width from an inner peripheral edge to an outer peripheral edge of an annular body in coil end portion 5r or coil wire path portion 5q is a stator coil width, a stator coil width in recessed portion 5i and recessed portion 5j is narrower than a stator coil width of an annular body of a turn adjacent to recessed portion 5i and recessed portion 5j. Specifically, the stator coil width in recessed portion 5i and recessed portion 5j has a width about 1/5 to 1/2 narrower than the stator coil width of the annular body of the turn adjacent to recessed portion 5i and recessed portion 5j. Furthermore, in accordance with the mode of narrowing the stator coil width, a mode of coil corner portion 5s in recessed portion 5i and recessed portion 5j adopts a suitable shape that does not hinder a flow of air or a refrigerant.

Note that the stator coil width in recessed portion 5i and recessed portion 5j is not limited to the mode of having the width about 1/5 to 1/2 narrower than the stator coil width of the annular body of the turn adjacent to recessed portion 5i and recessed portion 5j. A suitable stator coil width can be selected in consideration of matters such as a decrease in rigidity of the stator coil and an increase in Joule heat due to an increase in resistance in the conductor portion of the stator coil.

Furthermore, in a shape illustrated in FIG. 4, recessed portion 5i and recessed portion 5j are arranged over the entire circumferences of stator coil 5. However, the present invention is not limited to this mode, and a mode in which recessed portion 5i or recessed portion 5j is arranged in every other turn may be adopted. In some cases, the mode in which the recessed portions are arranged in every other turn may be more effective in increasing a surface area of the stator coil. This mode can secure a flow path for air, a refrigerant, or the like. Therefore, a cooling effect may be enhanced.

In the present exemplary embodiment, as illustrated in FIG. 10A, a mode may be adopted in which, at the bottom of each of the plurality of recessed portions, outer peripheral portions of coil wire path portions 5q and outer peripheral portions of coil corner portions 5s included in annular bodies having a plurality of turns adjacent to each other are located.

In the present exemplary embodiment, as illustrated in FIGS. 10B and 10C, a mode may be adopted in which, at the bottom of each of the plurality of recessed portions, an outer peripheral portion of coil wire path portion 5q and an outer peripheral portion of coil corner portion 5s included in an annular body having one turn are located.

Since a shape of coil corner portion 5s illustrated in FIG. 4 is greatly affected by processing accuracy of annular body 5m itself in stator coil 5, an R chamfer, a C chamfer, or the like may be arranged on the outer peripheral portion of coil corner portion 5s. By arranging the R chamfering, the C chamfering, or the like, an outer peripheral portion of annular body 5m may have a polygonal shape or a shape having R portions at four corners in a plan view.

Also for an inner peripheral portion of coil corner portion 5s illustrated in FIG. 4, a mode in which a fine relief groove is arranged may be adopted from a viewpoint of workability in processing annular body 5m itself in stator coil 5.

In the present exemplary embodiment, the number of turns of stator coil 5 is 10. However, the number of turns is not particularly limited to this, and another value may be used. Note that the number of turns of stator coil 5 illustrated in the drawing is a value that is slightly less than 10, if described correctly. Stator coil 5 illustrated in the drawing has a mode in which each of annular bodies 5m from a first turn to a ninth turn makes one round in an annular shape. On the other hand, a tenth turn has a mode in which the annular shape is less than one round and about one short side of annular body 5m lacks. If this mode is expressed by another expression, the tenth turn has a mode in which the annular shape is less than one round by about a quarter round, and is substantially a three-quarter round (3/4 rounds). The reason why the tenth turn is less than one round by about a quarter round is due to an arrangement mode of lead-out portion 5c and lead-out portion 5d. Depending on positions of the arrangement of lead-out portion 5c and lead-out portion 5d, it may be considered that the tenth turn makes one round or makes a round slightly more than one round. Similarly, a case where the first turn is less than one round or makes a round slightly more than one round may be considered.

As described above, according to the present exemplary embodiment, the stator coil in the motor of the present invention has a structure that increases a heat dissipation area for air, a refrigerant, oil, or the like, as compared with a stator coil illustrated as the conventional example. Furthermore, the structure is such that the circulation passages for air, a refrigerant, oil, or the like are increased. This structure makes it possible to efficiently enhance the cooling effect for the stator coil. Therefore, it is possible to implement the highly efficient motor. In addition, fluid such as air, a refrigerant, or oil passes from an upstream side of a flow to a downstream side of the flow through a gap (oil passage) near the stator coil, and further, a circulation is smoothed. Therefore, it is possible to enhance a heat dissipation effect.

### (Fourth exemplary embodiment)

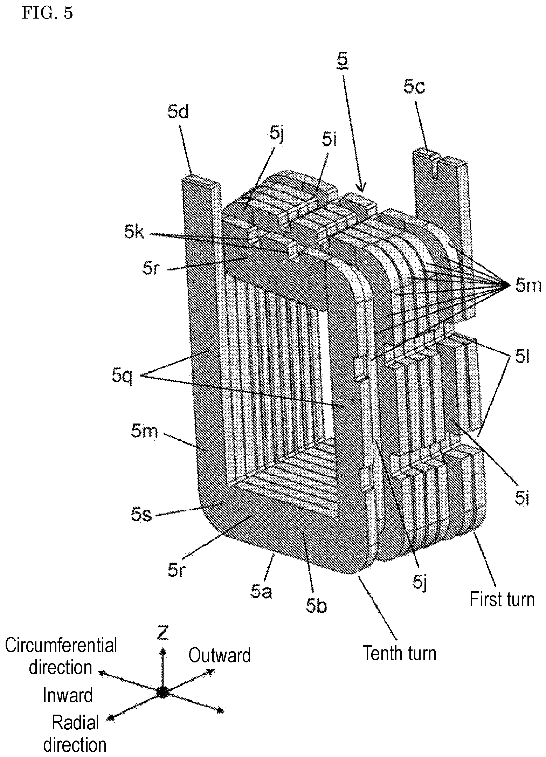

FIG. 5 is a perspective view illustrating stator coil 5 according to a fourth exemplary embodiment. A configuration of a motor of the fourth exemplary embodiment is similar to that of the first exemplary embodiment, and the description of overlapping contents will be omitted.

As illustrated in FIG. 5, in the present exemplary embodiment, stator coil 5, which is a spiral coil, has a mode in which a plurality of recessed portions is provided. The plurality of recessed portions is recessed with respect to a virtual envelope surface including an outer peripheral portion of coil end portion 5r, an outer peripheral portion of coil wire path portion 5q, and an outer peripheral portion of coil corner portion 5s. That is, in stator coil 5, which is the spiral coil, positions where the plurality of recessed portions is arranged extend over entire circumferences of an outer peripheral surface of stator coil 5.

At a bottom of recessed portion 5i, which is one of the plurality of recessed portions, an outer peripheral portion of coil wire path portion 5q, an outer peripheral portion of coil end portion 5r, and an outer peripheral portion of coil corner portion 5s of an annular body having one turn are located.

At a bottom of recessed portion 5j, which is another one of the plurality of recessed portions, outer peripheral portions of coil wire path portions 5q, outer peripheral portions of coil end portions 5r, and outer peripheral portions of coil corner portions 5s of annular bodies having a plurality of turns adjacent to each other are located.

Modes of recessed portion 5i and recessed portion 5j will be described below by expressions different from the above. That is, in annular bodies 5m illustrated in FIG. 5, when a width from an inner peripheral edge to an outer peripheral edge of an annular body in coil end portion 5r or coil wire path portion 5q is a stator coil width, a stator coil width in recessed portion 5i and recessed portion 5j is narrower than a stator coil width of an annular body of a turn adjacent to recessed portion 5i and recessed portion 5j. Specifically, the stator coil width in recessed portion 5i and recessed portion 5j has a width about 1/5 to 1/2 narrower than the stator coil width of the annular body of the turn adjacent to recessed portion 5i and recessed portion 5j. In accordance with the mode of narrowing the stator coil width, a mode of coil corner portion 5s in recessed portion 5i and recessed portion 5j adopts a suitable shape that does not hinder a flow of air or a refrigerant.

Note that the stator coil width in recessed portion 5i and recessed portion 5j is not limited to the mode of having the width about 1/5 to 1/2 narrower than the stator coil width of the annular body of the turn adjacent to recessed portion 5i and recessed portion 5j. A suitable stator coil width can be selected in consideration of matters such as a decrease in rigidity of the stator coil and an increase in Joule heat due to an increase in resistance in the conductor portion of the stator coil.

In a shape illustrated in FIG. 5, a mode is adopted in which recessed portion 5i and recessed portion 5j are arranged over the entire circumferences of stator coil 5, but the present invention is not limited to this mode, and a mode in which recessed portion 5i or recessed portion 5j is arranged in every other turn may be adopted. In some cases, the mode in which the recessed portions are arranged in every other turn may be more effective in increasing a surface area of the stator coil. This mode can secure a flow path for air, a refrigerant, or the like. Therefore, a cooling effect may be enhanced.

In the present exemplary embodiment, as illustrated in FIG. 10A, a mode may be adopted in which, at a bottom of each of the plurality of recessed portions, outer peripheral portions of coil wire path portions 5q and outer peripheral portions of coil corner portions 5s included in annular bodies having a plurality of turns adjacent to each other are located.

In the present exemplary embodiment, as illustrated in FIGS. 10B and 10C, a mode may be adopted in which, at a bottom of each of the plurality of recessed portions, an outer peripheral portion of coil wire path portion 5q and an outer peripheral portion of coil corner portion 5s included in an annular body having one turn are located.

A shape of coil corner portion 5s illustrated in FIG. 5 is greatly affected by processing accuracy of annular body 5m itself in stator coil 5. Therefore, an R chamfering, a C chamfering, or the like may be arranged on the outer peripheral portion of coil corner portion 5s. By arranging the R chamfering, the C chamfering, or the like, an outer peripheral portion of annular body 5m may have a polygonal shape or a shape having R portions at four corners in a plan view.

Furthermore, also for an inner peripheral portion of coil corner portion 5s illustrated in FIG. 5, a mode in which a fine relief groove is arranged may be adopted from a viewpoint of workability in processing annular body 5m itself in stator coil 5.

Note that, in the present exemplary embodiment, a number of turns of stator coil 5 is 10. However, the number of turns is not particularly limited to this, and another value may be used. Note that the number of turns of stator coil 5 illustrated in the drawing is a value that is slightly less than 10, if described correctly. Stator coil 5 illustrated in the drawing has a mode in which each of annular bodies 5m from a first turn to a ninth turn makes one round in an annular shape. On the other hand, a tenth turn has a mode in which the annular shape is less than one round and about one short side of annular body 5m lacks. If this mode is expressed by another expression, the tenth turn has a mode in which the annular shape is less than one round by about a quarter round, and is substantially a three-quarter round (3/4 rounds). The reason why the tenth turn is less than one round by about a quarter round is due to an arrangement mode of lead-out portion 5c and lead-out portion 5d. Depending on positions of the arrangement of lead-out portion 5c and lead-out portion 5d, the tenth turn may make one round or make a round slightly more than one round. Similarly, the first turn may be less than one round or make a round slightly more than one round.

Furthermore, in the present exemplary embodiment, groove-shaped recessed portion 5k and recessed portion 51 that communicate from a start turn to an end turn out of a predetermined number of turns are provided. A mode is adopted in which longitudinal directions of groove shapes of different recessed portions out of the plurality of recessed portions intersect with each other. That is, an arrangement is adopted in which a longitudinal direction of a groove shape of a recessed portion in the recessed portion 5k and recessed portion 51 is substantially orthogonal to a longitudinal direction of a groove shape of a recessed portion in recessed portion 5i and recessed portion 5j.

A cross-sectional shape of each of groove-shaped recessed portion 5k and recessed portion 51 communicating from the start turn to the end turn is, for example, a substantially quadrangular shape. However, the cross-sectional shape of the groove is not limited to this, and may be any shape such as a substantially triangular shape, a substantially semicircular shape, or a substantially trapezoidal shape. Positions where recessed portion 5k and recessed portion 51 are provided may be any of four surfaces of the envelope surface of the stator coil, and suitable positions are appropriately selected.

As described above, according to the present exemplary embodiment, the stator coil in the motor of the present invention has a structure that increases a heat dissipation area for air, a refrigerant, oil, or the like, as compared with a stator coil illustrated as the conventional example. Furthermore, the structure is such that the circulation passages for air, a refrigerant, oil, or the like are increased. This structure makes it possible to efficiently enhance the cooling effect for the stator coil. Therefore, it is possible to implement the highly efficient motor. Fluid such as air, a refrigerant, or oil passes from an upstream side of a flow to a downstream side of the flow through a gap (oil passage) near the stator coil, and further, a circulation is smoothed, so that a heat dissipation effect can be enhanced.

### (Fifth exemplary embodiment)

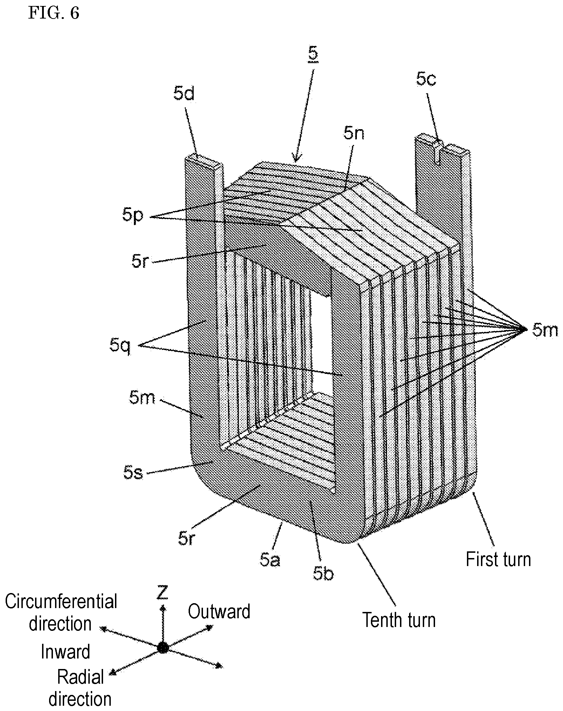

FIG. 6 is a perspective view illustrating stator coil 5 according to a fifth exemplary embodiment. A configuration of a motor of the fifth exemplary embodiment is similar to that of the first exemplary embodiment, and the description of overlapping contents will be omitted.

Stator coil 5, which is a spiral coil illustrated in FIG. 6, forms, as ridge line 5n, central portions of coil end portions from a start turn to an end turn out of a predetermined number of turns, and is provided with slopes 5p inclined downward from ridge line 5n to each coil corner portion 5s, in a virtual envelope surface including an outer peripheral portion of coil end portion 5r, an outer peripheral portion of coil wire path portion 5q, and an outer peripheral portion of coil corner portion 5s.

Each of slopes 5p is illustrated as a flat surface. However, a mode of slope 5p is not limited to this, but may be a convex curved surface, a concave curved surface, a composite slope including a plurality of different inclination angles, or some function curved surface, and is not particularly limited.

Slopes 5p have a mode in which slopes 5p are arranged only on a side of one coil end portion 5r of stator coil 5, which is the spiral coil, but slopes may be arranged in each of both coil end portions 5r, and are not particularly limited.

The number of turns of stator coil 5 is 10. However, the number of turns is not particularly limited to this, and another value may be used. Note that the number of turns of stator coil 5 illustrated in the drawing is a value that is slightly less than 10, if described correctly. Stator coil 5 illustrated in FIG. 6 has a mode in which each of annular bodies 5m from a first turn to a ninth turn makes one round in an annular shape. On the other hand, a tenth turn has a mode in which the annular shape is less than one round and about one short side of annular body 5m lacks. If this mode is expressed by another expression, the tenth turn has a mode in which the annular shape is less than one round by about a quarter round, and is substantially a three-quarter round (3/4 rounds). The reason why the tenth turn is less than one round by about a quarter round is due to an arrangement mode of lead-out portion 5c and lead-out portion 5d. Depending on positions of the arrangement of lead-out portion 5c and lead-out portion 5d, the tenth turn may make one round or make a round slightly more than one round. Similarly, the first turn may be less than one round or make a round slightly more than one round.

As described above, motor 1 of the present exemplary embodiment at least includes stator core 41 including a laminated body where a plurality of stator core sheets 41a is laminated, stator 4 including stator coil 5 that uses, as a part of a magnetic core, a tooth included in stator core 41, and rotor 3 rotatably supported via a tip of tooth 42 of stator core 41 and a void. Stator coil 5 constitutes a spiral coil including annular bodies 5m having a predetermined number of turns, each of annular bodies 5m includes conductive wire portion 5a, conductive wire portion 5a includes a conductor portion and insulating coating 5b that covers the conductor portion, the conductor portion has a substantially quadrangular cross-sectional shape, and when a part of each of annular bodies 5m that is located on each of laminating surface sides of tooth 42 is defined as coil wire path portion 5q, a portion that is a part of each of annular bodies 5m and is located between end portions of a pair of coil wire path portions 5m in the same direction is defined as coil end portion 5r, and a portion where one end of coil wire path portion 5q transitions to one end of coil end portion 5r is defined as a coil corner portion, stator coil 5 forms, as ridge line 5n, central portions of coil end portions 5r from a start turn to an end turn out of the predetermined number of turns, and is provided with slopes inclined downward from ridge line 5n to each coil corner portion 5s, in a virtual envelope surface including an outer peripheral portion of coil end portion 5r, an outer peripheral portion of coil wire path portion 5q, and an outer peripheral portion of coil corner portion 5s in the spiral coil.

As described above, according to the present exemplary embodiment, the stator coil in the motor of the present invention has a structure that increases a heat dissipation area for air, a refrigerant, oil, or the like, as compared with a stator coil illustrated as the conventional example. Furthermore, the structure is such that the circulation passages for air, a refrigerant, oil, or the like are increased. This structure makes it possible to efficiently enhance the cooling effect for the stator coil. Therefore, it is possible to implement the highly efficient motor. Fluid such as air, a refrigerant, or oil passes from an upstream side of a flow to a downstream side of the flow through a gap (oil passage) near the stator coil, and further, a circulation is smoothed, so that a heat dissipation effect can be enhanced.

### (Sixth exemplary embodiment)

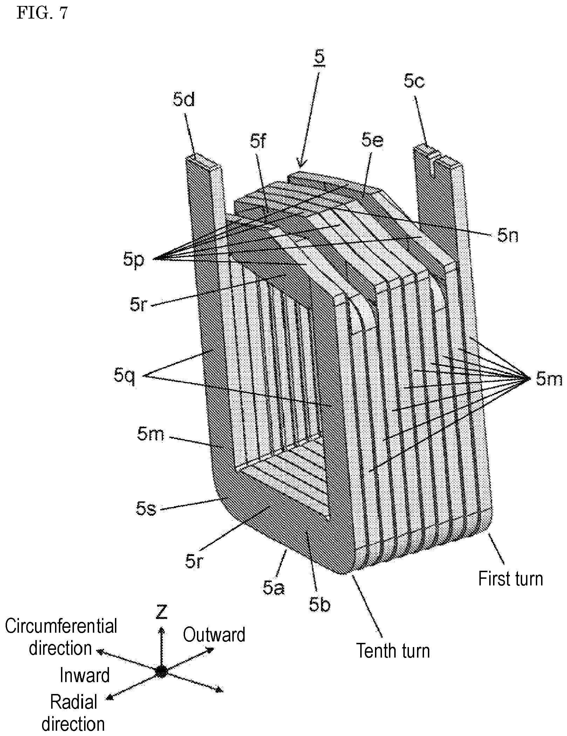

FIG. 7 is a perspective view illustrating stator coil 5 according to a sixth exemplary embodiment. A configuration of a motor of the sixth exemplary embodiment is similar to that of the first exemplary embodiment, and the description of overlapping contents will be omitted. A configuration of stator coil 5 of the sixth exemplary embodiment is substantially similar to that of the first exemplary embodiment, and the description of overlapping contents will be omitted.

Stator coil 5, which is a spiral coil illustrated in FIG. 7, forms, as ridge line 5n, central portions of coil end portions from a start turn to an end turn out of a predetermined number of turns, and is provided with slopes 5p inclined downward from ridge line 5n to each coil corner portion 5s, in a virtual envelope surface including an outer peripheral portion of coil end portion 5r, an outer peripheral portion of coil wire path portion 5q, and an outer peripheral portion of coil corner portion 5s.

Each of slopes 5p is illustrated as a flat surface. However, a mode of slope 5p is not limited to this, but may be a convex curved surface, a concave curved surface, a composite slope including a plurality of different inclination angles, or some function curved surface, and is not particularly limited.

Slopes 5p have a mode in which slopes 5p are arranged only on a side of one coil end portion 5r of stator coil 5, which is the spiral coil, but slopes 5p may be arranged in each of both coil end portions 5r, and are not particularly limited.

According to the present exemplary embodiment, the stator coil in the motor of the present invention has a structure that increases a heat dissipation area for air, a refrigerant, oil, or the like, as compared with the stator coil illustrated as the conventional example. Furthermore, the structure is such that the circulation passages for air, a refrigerant, oil, or the like are increased. This structure makes it possible to efficiently enhance the cooling effect for the stator coil. Therefore, it is possible to implement the highly efficient motor. Fluid such as air, a refrigerant, or oil passes from an upstream side of a flow to a downstream side of the flow through a gap (oil passage) near the stator coil, and further, a circulation is smoothed, so that a heat dissipation effect can be enhanced.

### (Seventh exemplary embodiment)

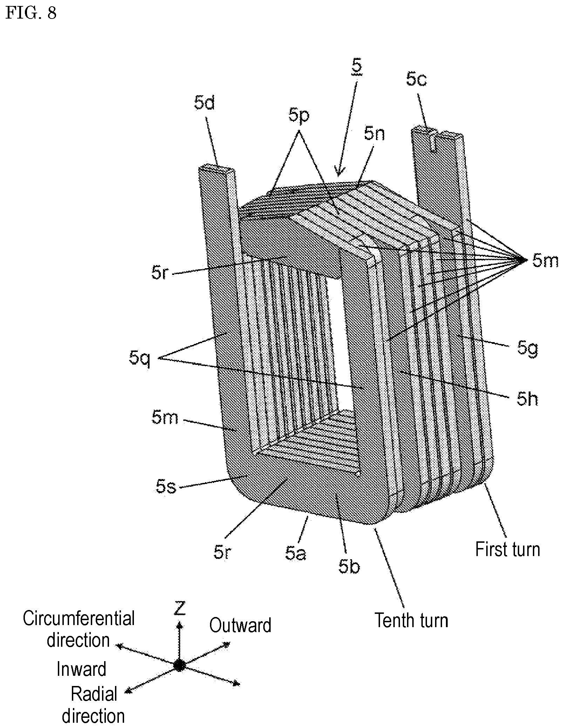

FIG. 8 is a perspective view illustrating stator coil 5 according to a seventh exemplary embodiment. A configuration of a motor of the seventh exemplary embodiment is similar to that of the first exemplary embodiment, and the description of overlapping contents will be omitted. A configuration of stator coil 5 of the seventh exemplary embodiment is substantially similar to that of the first exemplary embodiment, and the description of overlapping contents will be omitted.

Stator coil 5, which is a spiral coil illustrated in FIG. 8, forms, as ridge line 5n, central portions of coil end portions from a start turn to an end turn out of a predetermined number of turns, and is provided with slopes 5p inclined downward from ridge line 5n to each coil corner portion 5s, in a virtual envelope surface including an outer peripheral portion of coil end portion 5r, an outer peripheral portion of coil wire path portion 5q, and an outer peripheral portion of coil corner portion 5s.

Each of slopes 5p is illustrated as a flat surface. However, a mode of slope 5p is not limited to this, but may be a convex curved surface, a concave curved surface, a composite slope including a plurality of different inclination angles, or some function curved surface, and is not particularly limited.

Slopes 5p have a mode in which slopes 5p are arranged only on a side of one coil end portion 5r of stator coil 5, which is the spiral coil, but slopes 5p may be arranged in each of both coil end portions 5r, and are not particularly limited.

The number of turns of stator coil 5 is 10. However, the number of turns is not particularly limited to this, and another value may be used. Note that the number of turns of stator coil 5 illustrated in the drawing is a value that is slightly less than 10, if described correctly. Stator coil 5 illustrated in FIG. 8 has a mode in which each of annular bodies 5m from a first turn to a ninth turn makes one round in an annular shape. On the other hand, a tenth turn has a mode in which the annular shape is less than one round and about one short side of annular body 5m lacks. If this mode is expressed by another expression, the tenth turn has a mode in which the annular shape is less than one round by about a quarter round, and is substantially a three-quarter round (3/4 rounds). The reason why the tenth turn is less than one round by about a quarter round is due to an arrangement mode of lead-out portion 5c and lead-out portion 5d. Depending on positions of the arrangement of lead-out portion 5c and lead-out portion 5d, the tenth turn may make one round or make a round slightly more than one round. Similarly, the first turn may be less than one round or make a round slightly more than one round.

As described above, according to the present exemplary embodiment, the stator coil in the motor of the present invention has a structure that increases a heat dissipation area for air, a refrigerant, oil, or the like, as compared with a stator coil illustrated as the conventional example. Furthermore, the structure is such that the circulation passages for air, a refrigerant, oil, or the like are increased. This structure makes it possible to efficiently enhance the cooling effect for the stator coil. Therefore, it is possible to implement the highly efficient motor. Fluid such as air, a refrigerant, or oil passes from an upstream side of a flow to a downstream side of the flow through a gap (oil passage) near the stator coil, and further, a circulation is smoothed, so that a heat dissipation effect can be enhanced.

### (Eighth exemplary embodiment)

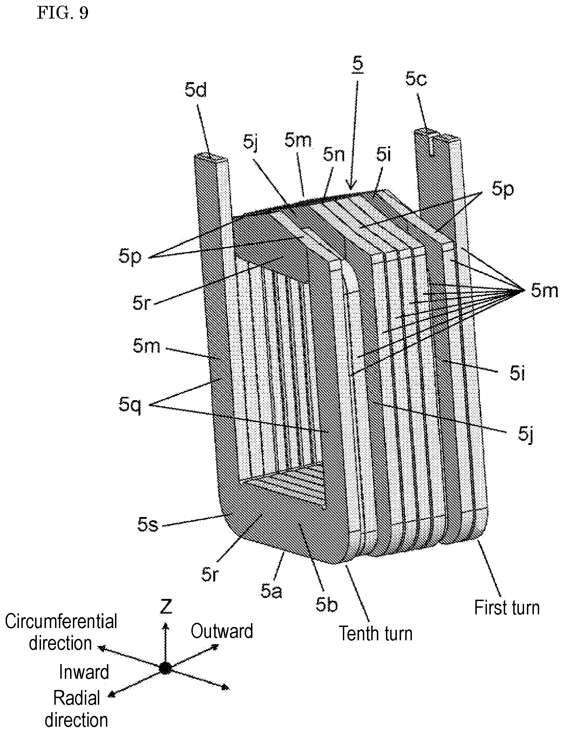

FIG. 9 is a perspective view illustrating stator coil 5 according to an eighth exemplary embodiment. A configuration of a motor of the eighth exemplary embodiment is similar to that of the first exemplary embodiment, and the description of overlapping contents will be omitted. A configuration of stator coil 5 of the eighth exemplary embodiment is substantially similar to that of the third exemplary embodiment, and the description of overlapping contents will be omitted.

Stator coil 5, which is a spiral coil illustrated in FIG. 9, forms, as ridge line 5n, central portions of coil end portions from a start turn to an end turn out of a predetermined number of turns, and is provided with slopes 5p inclined downward from ridge line 5n to each coil corner portion 5s, in a virtual envelope surface including an outer peripheral portion of coil end portion 5r, an outer peripheral portion of coil wire path portion 5q, and an outer peripheral portion of coil corner portion 5s.

Slopes 5p have a mode in which slopes 5p are arranged only on a side of one coil end portion 5r of stator coil 5, which is the spiral coil, but slopes 5p may be arranged in each of both coil end portions 5r, and are not particularly limited.

Each of slopes 5p is illustrated as a flat surface. However, a mode of slope 5p is not limited to this, but may be a convex curved surface, a concave curved surface, a composite slope including a plurality of different inclination angles, or some function curved surface, and is not particularly limited.

The number of turns of stator coil 5 is 10. However, the number of turns is not particularly limited to this, and another value may be used. Note that the number of turns of stator coil 5 illustrated in the drawing is a value that is slightly less than 10, if described correctly. Stator coil 5 illustrated in FIG. 8 has a mode in which each of annular bodies 5m from a first turn to a ninth turn makes one round in an annular shape. On the other hand, a tenth turn has a mode in which the annular shape is less than one round and about one short side of annular body 5m lacks. If this mode is expressed by another expression, the tenth turn has a mode in which the annular shape is less than one round by about a quarter round, and is substantially a three-quarter round (3/4 rounds). The reason why the tenth turn is less than one round by about a quarter round is due to an arrangement mode of lead-out portion 5c and lead-out portion 5d. Depending on positions of the arrangement of lead-out portion 5c and lead-out portion 5d, the tenth turn may make one round or make a round slightly more than one round. Similarly, the first turn may be less than one round or make a round slightly more than one round.

As described above, according to the present exemplary embodiment, the stator coil in the motor of the present invention has a structure that increases a heat dissipation area for air, a refrigerant, oil, or the like, as compared with a stator coil illustrated as the conventional example. Furthermore, the structure is such that the circulation passages for air, a refrigerant, oil, or the like are increased. This structure makes it possible to efficiently enhance the cooling effect for the stator coil. Therefore, it is possible to implement the highly efficient motor. Fluid such as air, a refrigerant, or oil passes from an upstream side of a flow to a downstream side of the flow through a gap (oil passage) near the stator coil, and further, a circulation is smoothed, so that a heat dissipation effect can be enhanced.

### (Ninth exemplary embodiment)

FIG. 10A is a cross-sectional view illustrating stator coils 5 according to a ninth exemplary embodiment. FIG. 10B is a cross-sectional view illustrating other stator coils 5 according to the ninth exemplary embodiment. FIG. 10C is a cross-sectional view illustrating other stator coils 5 according to the ninth exemplary embodiment. FIG. 10D is a cross-sectional view illustrating other stator coils 5 according to the ninth exemplary embodiment. FIG. 10E is a cross-sectional view illustrating other stator coils 5 according to the ninth exemplary embodiment. FIG. 10F is a cross-sectional view illustrating other stator coils 5 according to the ninth exemplary embodiment. Modes of stator coil 5 shown in the ninth exemplary embodiment are modes applicable to the second exemplary embodiment, the third exemplary embodiment, the fourth exemplary embodiment, the seventh exemplary embodiment, and the eighth exemplary embodiment.

A configuration of a motor according to the ninth exemplary embodiment is similar to that of the first exemplary embodiment, and the description of overlapping contents will be omitted. Furthermore, a configuration of stator coil 5 according to the ninth exemplary embodiment is substantially similar to that of the second exemplary embodiment, the third exemplary embodiment, the fourth exemplary embodiment, the seventh exemplary embodiment, and the eighth exemplary embodiment, and the description of overlapping contents will be omitted.

A total number of turns of stator coil 5 illustrated in FIG. 10A is substantially 10. Stator coil 5 illustrated in FIG. 10A has a mode in which a second turn, a third turn, a seventh turn, and an eighth turn each have a width dimension of a conductor narrower than that of an adjacent turn. This mode forms oil passages 45.

A total number of turns of stator coil 5 illustrated in FIG. 10B is substantially 10. Stator coil 5 illustrated in FIG. 10B has a mode in which a second turn, a fifth turn, and a ninth turn each have a width dimension of a conductor narrower than that of an adjacent turn. It is considered that a surface area of stator coil 5 in the mode of stator coil 5 illustrated in FIG. 10B can be made larger than that in the mode of stator coil 5 illustrated in FIG. 10A, and a heat dissipation effect of stator coil 5 can be enhanced.

A total number of turns of stator coil 5 illustrated in FIG. 10C is substantially 10. Stator coil 5 illustrated in FIG. 10C has a mode in which a width dimension of a conductor is narrower in turns of the stator coil located on a tip side of a tooth than in front and rear turns. This mode forms oil passages 45. In stator coil 5 in FIG. 11B illustrated as a conventional example, it is known that an eddy current loss in turns of the stator coil located on a tip side of tooth 42 tends to be larger than in other turns. Therefore, the mode is adopted in which the width dimension of the conductor in the turns of the stator coil located on the tip side of the tooth is narrower than that in other turns, and positions where the width dimension is made smaller than a stator coil width in the front and rear turns are concentratedly arranged on the tip side of tooth 42. This mode makes it possible to reduce a loss and heat generation due to eddy currents.

Stator coils 5 illustrated in FIGS. 10D and 10E have a mode in which overall shapes of adjacent stator coils in a slot of a stator are different from each other. This mode forms oil passages 45. It is important to increase the surface area of the stator coil and to form flow paths for liquid, and it is not necessary that the adjacent stator coils have the same shape. As illustrated in FIGS. 10D and 10E, the flow paths for liquid are formed by making the adjacent stator coils different from each other in the overall shape. With this configuration, the flow paths are secured while a cross-sectional area of the conductor is specified within an allowable range and a Joule loss of the conductor is reduced. This makes it possible to reduce the heat generation and enhance a cooling effect.

Stator coil 5 illustrated in FIG. 10F has a mode in which voids 46 are arranged on a side tip side of tooth 42 and on an inner peripheral side of stator coil 5 in contact with tooth 42. This mode makes is possible to effectively reduce the heat generation due to the eddy currents in the stator coil. Therefore, this mode contributes to improvement of a performance of the motor.

According to the present exemplary embodiment, the stator coil in the motor of the present invention has a structure that increases a heat dissipation area for air, a refrigerant, oil, or the like, as compared with the stator coil illustrated as the conventional example. Furthermore, the structure is such that the circulation passages for air, a refrigerant, oil, or the like are increased. This structure makes it possible to efficiently enhance the cooling effect for the stator coil. Therefore, it is possible to implement a highly efficient motor. Fluid such as air, a refrigerant, or oil passes from an upstream side of a flow to a downstream side of the flow through a gap (oil passage 45) near the stator coil. Furthermore, circulation of the fluid is smoothed. Therefore, it is possible to enhance a heat dissipation effect.

Stator coil 5 in the present invention can be formed by casting. According to this method, it is possible to easily mold a spiral stator coil with a conductive wire having a large cross-sectional area. Note that the method is not limited to the above casting and stator coil 5 may be formed by another method. For example, a solid material such as copper, aluminum, zinc, magnesium, iron, steel use stainless (SUS), or brass may be cut to form stator coil 5. Furthermore, individually molded parts may be welded or joined to each other to form an integrated member, so that stator coil 5 may be formed.

### INDUSTRIAL APPLICABILITY

A stator coil in a motor of the present invention can enhance a cooling performance and is useful when applied to a motor or electric power equipment.

### REFERENCE MARKS IN THE DRAWINGS

- 1: motor
- 3: rotor
- 4: stator
- 5: stator coil
- 5a: conductive wire portion
- 5b: insulating coating
- 5c: lead-out portion
- 5d: lead-out portion
- 5e: recessed portion
- 5f: recessed portion
- 5g: recessed portion
- 5h: recessed portion
- 5i: recessed portion
- 5j: recessed portion
- 5k: recessed portion
- 51: recessed portion
- 5m: annular body
- 5n: ridge line
- 5p: slope
- 5q: coil wire path portion
- 5r: coil end portion
- 5s: coil corner portion
- 41: stator core
- 41a: stator core sheet
- 42: tooth
- 43: slot
- 44: yoke
- 45: oil passage
- 46: void

## Claims

1. A motor (1) at least comprising: a stator core (41) including a laminated body where a plurality of stator core sheets (41a) is laminated; a stator (4) including a stator coil (5) that uses, as a part of a magnetic core, a tooth (42) included in the stator core (41); and a rotor (3) rotatably supported via a tip of the tooth (42) of the stator core (41) and an air gap,
wherein
the stator coil (5) constitutes a spiral coil including annular bodies having a predetermined number of turns, each of the annular bodies includes a conductive wire portion (5a), the conductive wire portion (5a) includes a conductor portion and an insulating coating (5b) that covers the conductor portion, the conductor portion has a substantially quadrangular cross-sectional shape,
a part of each of the annular bodies that is located on each of laminating surface sides of the tooth (42) is defined as a coil wire path portion (5q), a portion that is a part of each of the annular bodies and is located between end portions of a pair of the coil wire path portions (5q) in a same direction is defined as a coil end portion (5r), a portion where one end of the coil wire path portion transitions to one end of the coil end portion (5r) is defined as a coil corner portion (5s),
the stator coil (5) is provided with at least one recessed portion (5e, 5f, 5g, 5h, 5i, 5j, 5k, 51) that is recessed with respect to a virtual envelope surface including an outer peripheral portion of the coil end portion (5r), an outer peripheral portion of the coil wire path portion (5q), and an outer peripheral portion of the coil corner portion (5s) in the spiral coil,
**characterized in that**
a width of the stator coil (5) at the recessed portion (5e, 5f, 5g, 5h, 5i, 5j, 5k, 51) is narrower than a stator coil width of the annular body of a turn adjacent to the recessed portion (5e, 5f, 5g, 5h, 5i, 5j, 5k, 51) of the spiral coil.

2. The motor (1) according to claim 1, further comprising:
a plurality of recessed portions (5e, 5f),
wherein
the plurality of recessed portions is located on a coil end side in the spiral coil,
at a bottom of at least one of the plurality of recessed portions (5e, 5f), an outer peripheral portion of a the coil end portion (5r) and the outer peripheral portion of the coil corner portion (5s) of the annular body having one turn are located, and
at a bottom of at least another one of the plurality of recessed portions_(5e, 5f), outer peripheral portions of coil end portions (5r) and outer peripheral portions of coil corner portions (5s) of annular bodies having a plurality of turns adjacent to each other are located.

3. The motor (1) according to claim 1, further comprising:
a plurality of recessed portions (5g, 5h),
wherein
the plurality of recessed portions (5g, 5h) is located on a side of the coil wire path portion (5q) in the spiral coil,
at a bottom of at least one of the plurality of recessed portions (5g, 5h,), an outer peripheral portion of the coil wire path portion (5q) and an outer peripheral portion of the coil corner portion (5s) of the annular body having one turn are located, and
at a bottom of at least another one of the plurality of recessed portions (5g, 5h), outer peripheral portions of coil wire path portions (5q) and outer peripheral portions of coil corner portions (5s) of annular bodies having a plurality of turns adjacent to each other are located.

4. The motor (1) according to claim 1, further comprising:
a plurality of recessed portions (5i, 5j),
wherein
the plurality of recessed portions (5i, 5j) is located on a side of the coil wire path portion (5q) in the spiral coil, and
at a bottom of each of the plurality of recessed portions (5i, 5j), outer peripheral portions of coil wire path portions (5q) and outer peripheral portions of coil corner portions (5s) of annular bodies having a plurality of turns adjacent to each other are located.

5. The motor according to claim 1, further comprising:
a plurality of recessed portions (5g, 5h),
wherein
the plurality of recessed portions (5g, 5h) is located on a side of the coil wire path portion (5q) in the spiral coil, and
at a bottom of each of the plurality of recessed portions (5g, 5h), an outer peripheral portion of the coil wire path portion (5q) and an outer peripheral portion of the coil corner portion (5s) of an annular body having one turn are located.

6. The motor (1) according to claim 1, further comprising:
a plurality of recessed portions (5i, 5j),
wherein
the plurality of recessed portions is located over an outer peripheral surface of the spiral coil,
at a bottom of at least one of the plurality of recessed portions (5i, 5j), an outer peripheral portion of an annular body having one turn is located, and
at a bottom of at least another one of the plurality of recessed portions (5i, 5j), outer peripheral portions of annular bodies having a plurality of turns adjacent to each other are located.

7. The motor (1) according to claim 1, further comprising:
a plurality of recessed portions (5i, 5j),
wherein
the plurality of recessed portions (5i, 5j) is located over an outer peripheral surface of the spiral coil, and
at a bottom of each of the plurality of recessed portions (5i, 5j), outer peripheral portions of annular bodies having a plurality of turns adjacent to each other are located.

8. The motor (1) according to claim 1, further comprising:
a plurality of recessed portions (5i, 5j),
wherein
the plurality of recessed portions (5i, 5j) is located over an outer peripheral surface of the spiral coil, and
at a bottom of each of the plurality of recessed portions (5i, 5j), an outer peripheral portion of an annular body having one turn is located.

9. The motor (1) according to claim 1, further comprising:
a plurality of recessed portions (5i, 5j, 5k, 5l),
wherein
the plurality of recessed portions (5i, 5j, 5k, 51) is located over an outer peripheral surface of the spiral coil,
at a bottom of at least one of the plurality of recessed portions (5i, 5j), an outer peripheral portion of an annular body having one turn is located,
at a bottom of at least one of the plurality of recessed portions (5j 5j), outer peripheral portions of annular bodies having a plurality of turns adjacent to each other are located,
at least another one of the plurality of recessed portions (5k, 51) is a groove-shaped recessed portion that communicates from a start turn to an end turn out of the predetermined number of turns, and longitudinal directions of groove shapes of different recessed portions out of the plurality of recessed portions intersect with each other.

10. The motor (1) according to claim 1, further comprising:
a plurality of recessed portions (5e, 5f),
wherein
the stator coil forms, as a ridge line (5n), central portions of coil end portions (5r) from a start turn to an end turn out of the predetermined number of turns, and is provided with slopes (5p) inclined downward from the ridge line (5n) to each coil corner portion (5s), in a virtual envelope surface including an outer peripheral portion of the coil end portion (5r), an outer peripheral portion of the coil wire path portion (5q), and an outer peripheral portion of the coil corner portion (5s) in the spiral coil,
the plurality of recessed portions (5e, 5f) is located on a side of the coil end portion (5r) of the spiral coil,
at a bottom of at least one of the plurality of recessed portions (5e, 5f), an outer peripheral portion of a coil end portion (5r) and an outer peripheral portion of a coil corner portion (5s) of the annular body having one turn are located, and
at a bottom of at least another one of the plurality of recessed portions (5e, 5f), outer peripheral portions of coil end portions (5r) and outer peripheral portions of coil corner portions (5s) of annular bodies having a plurality of turns adjacent to each other are located.

11. The motor (1) according to claim 10,
wherein the plurality of recessed portions (5g, 5h) is located on a side of the coil wire path portion (5q) of the spiral coil,
at a bottom of at least one of the plurality of recessed portions (5g, 5h), an outer peripheral portion of a coil wire path portion (5q) and an outer peripheral portion of a coil corner portion (5s) of an annular body having one turn are located, and
at a bottom of at least another one of the plurality of recessed portions (5g, 5h), outer peripheral portions of coil wire path portions (5q) and outer peripheral portions of coil corner portions (5s) of annular bodies having a plurality of turns adjacent to each other are located.

12. The motor (1) according to claim 10,
wherein a plurality of recessed portions (5i, 5j) is located over an outer peripheral surface of the spiral coil,
at a bottom of at least one of the plurality of recessed portions (5i, 5j), an outer peripheral portion of an annular body having one turn is located, and
at a bottom of at least another one of the plurality of recessed portions (5i, 5j), outer peripheral portions of annular bodies having a plurality of turns adjacent to each other are located.

13. The motor (1) according to claim 1, wherein
the stator coil has an air gap (46) between an inner peripheral edge portion of any of the annular bodies and the magnetic core.

14. The motor (1) according to claim 1, wherein
the stator coil has an air gap (46) between inner peripheral edge portions of a plurality of annular bodies out of the annular bodies and the magnetic core, the plurality of annular bodies being located on a side of the tip of the tooth.

## Patentansprüche

1. Motor (1), der mindestens Folgendes umfasst: Einen Statorkern (41), der einen laminierten Körper umfasst, in dem eine Vielzahl von Statorkernblechen (41a) laminiert ist; einen Stator (4) mit einer Statorspule (5), die als Teil eines Magnetkerns einen im Statorkern (41) enthaltenen Zahn (42) verwendet; und einen Rotor (3), der über eine Zahnspitze (42) des Statorkerns (41) und einen Luftspalt drehbar gelagert ist,
wobei
die Statorspule (5) eine Spiralspule mit ringförmigen Körpern mit einer vorbestimmten Anzahl von Windungen darstellt, jeder der ringförmigen Körper einen leitenden Drahtabschnitt (5a) umfasst, der leitende Drahtabschnitt (5a) einen Leiterabschnitt und eine isolierende Beschichtung (5b) umfasst, die den Leiterabschnitt abdeckt, wobei der Leiterabschnitt eine im Wesentlichen viereckige Querschnittsform aufweist,
ein Teil jedes der ringförmigen Körper, der sich auf jeder der laminierenden Oberflächenseiten des Zahns (42) befindet, als Spulendrahtpfadabschnitt (5q) definiert ist, ein Abschnitt, der ein Teil jedes der ringförmigen Körper ist und zwischen Endabschnitten eines Paares von Spulendrahtpfadabschnitten (5q) in derselben Richtung angeordnet ist, als Spulenendabschnitt (5r) definiert ist, ein Abschnitt, an dem ein Ende des Spulendrahtpfadabschnitts in ein Ende des Spulenendabschnitts (5r) übergeht, als Spuleneckabschnitt (5s) definiert ist.
die Statorspule (5) mit mindestens einem vertieften Abschnitt (5e, 5f, 5g, 5h, 5i, 5j, 5k, 51) versehen ist, der in Bezug auf eine virtuelle Hüllfläche einschließlich eines äußeren Umfangsabschnitts des Spulenendabschnitts (5r) vertieft ist, einen Außenumfangsabschnitt des Spulendrahtpfadabschnitts (5q) und einen Außenumfangsabschnitt des Spuleneckabschnitts (5s) in der Spiralspule,
**dadurch gekennzeichnet, dass**
eine Breite der Statorspule (5) am vertieften Abschnitt (5e, 5f, 5g, 5h, 5i, 5j, 5k, 51) schmaler ist als eine Statorspulenbreite des ringförmigen Körpers einer an den vertieften Abschnitt angrenzenden Windung (5e, 5f, 5g, 5h, 5i, 5j, 5k, 51) der Spiralspule.

2. Motor (1) nach Anspruch 1, der ferner umfasst:
eine Vielzahl von vertieften Abschnitten (5e, 5f),
wobei
die mehreren vertieften Abschnitte sich auf einer Spulenendseite in der Spiralspule befinden,
an einem Boden von mindestens einem der mehreren vertieften Abschnitte (5e, 5f) ein Außenumfangsabschnitt des Spulenendabschnitts (5r) und der Außenumfangsabschnitt des Spuleneckabschnitts (5s) des ringförmigen Körpers mit einer Windung angeordnet sind, und
an einem Boden von mindestens einem anderen der mehreren vertieften Abschnitte (5e, 5f) Außenumfangsabschnitte von Spulenendabschnitten (5r) und Außenumfangsabschnitte von Spuleneckabschnitten (5s) von ringförmigen Körpern, die mehrere benachbarte Windungen aufweisen, angeordnet sind.

3. Motor (1) nach Anspruch 1, der ferner umfasst:
eine Vielzahl von vertieften Abschnitten (5g, 5h),
wobei
die mehreren vertieften Abschnitte (5g, 5h) sich auf einer Seite des Spulendrahtpfadabschnitts (5q) in der Spiralspule befinden,
an einem Boden von mindestens einem der mehreren vertieften Abschnitte (5g, 5h), ein Außenumfangsabschnitt des Spulendrahtpfadabschnitts (5q) und ein Außenumfangsabschnitt des Spuleneckabschnitts (5s) des ringförmigen Körpers mit einer Windung angeordnet sind, und
an einem Boden von mindestens einem weiteren der mehreren vertieften Abschnitte (5g, 5h), Außenumfangsabschnitte von Spulendrahtpfadabschnitten (5q) und Außenumfangsabschnitte von Spuleneckabschnitten (5s) von ringförmigen Körpern, die mehrere benachbarte Windungen aufweisen, angeordnet sind.

4. Motor (1) nach Anspruch 1, der ferner umfasst:
eine Vielzahl von vertieften Abschnitten (5i, 5j),
wobei
die mehreren vertieften Abschnitte (5i, 5j) sich auf einer Seite des Spulendrahtpfadabschnitts (5q) in der Spiralspule befinden, und
an einem Boden jedes der mehreren vertieften Abschnitte (5i, 5j) Außenumfangsabschnitte von Spulendrahtpfadabschnitten (5q) und Außenumfangsabschnitte von Spuleneckabschnitten (5s) von ringförmigen Körpern, die mehrere benachbarte Windungen aufweisen, angeordnet sind.

5. Motor nach Anspruch 1, der ferner umfasst:
eine Vielzahl von vertieften Abschnitten (5g, 5h),
wobei
die mehreren vertieften Abschnitte (5g, 5h) sich auf einer Seite des Spulendrahtpfadabschnitts (5q) in der Spiralspule befinden, und
an einem Boden jedes der mehreren vertieften Abschnitte (5g, 5h) ein Außenumfangsabschnitt des Spulendrahtpfadabschnitts (5q) und ein Außenumfangsabschnitt des Spuleneckabschnitts (5s) eines ringförmigen Körpers mit einer Windung angeordnet sind.

6. Motor (1) nach Anspruch 1, der ferner umfasst:
eine Vielzahl von vertieften Abschnitten (5i, 5j),
wobei
die mehreren vertieften Abschnitte sich über einer Außenumfangsfläche der Spiralspule befinden,
an einem Boden von mindestens einem der mehreren vertieften Abschnitte (5i, 5j) ein Außenumfangsabschnitt eines ringförmigen Körpers mit einer Windung angeordnet ist, und
am Boden von mindestens einem weiteren der mehreren vertieften Abschnitte (5i, 5j) Außenumfangsabschnitte von ringförmigen Körpern mit mehreren aneinander angrenzenden Windungen angeordnet sind.

7. Motor (1) nach Anspruch 1, der ferner umfasst:
eine Vielzahl von vertieften Abschnitten (5i, 5j),
wobei
die mehreren vertieften Abschnitte (5i, 5j) über einer Außenumfangsfläche der Spiralspule angeordnet sind, und
am Boden jedes der mehreren vertieften Abschnitte (5i, 5j) Außenumfangsabschnitte von ringförmigen Körpern mit mehreren aneinander angrenzenden Windungen angeordnet sind.

8. Motor (1) nach Anspruch 1, der ferner umfasst:
eine Vielzahl von vertieften Abschnitten (5i, 5j),
wobei
die mehreren vertieften Abschnitte (5i, 5j) über einer Außenumfangsfläche der Spiralspule angeordnet sind, und
am Boden jedes der mehreren vertieften Abschnitte (5i, 5j) ein Außenumfangsabschnitt eines ringförmigen Körpers mit einer Windung angeordnet ist.

9. Motor (1) nach Anspruch 1, der ferner umfasst:
eine Vielzahl von vertieften Abschnitten (5i, 5j, 5k, 5l),
wobei
die mehreren vertieften Abschnitte (5i, 5j, 5k, 51) über einer Außenumfangsfläche der Spiralspule angeordnet sind,
an einem Boden von mindestens einem der mehreren vertieften Abschnitte (5i, 5j) ein Außenumfangsabschnitt eines ringförmigen Körpers mit einer Windung angeordnet ist,
an einem Boden von mindestens einem der mehreren vertieften Abschnitte (5j, 5j) Außenumfangsabschnitte von ringförmigen Körpern mit mehreren aneinander angrenzenden Windungen angeordnet sind,
mindestens ein weiterer der mehreren vertieften Abschnitte (5k, 51) ein nutförmiger vertiefter Abschnitt ist, der von einer Anfangswindung zu einer Endwindung aus der vorbestimmten Anzahl von Windungen kommuniziert, und Längsrichtungen von Nutformen verschiedener vertiefter Abschnitte aus den mehreren vertieften Abschnitten sich überschneiden.

10. Motor (1) nach Anspruch 1, der ferner umfasst:
eine Vielzahl von vertieften Abschnitten (5e, 5f),
wobei
die Statorspule als Gratlinie (5n) zentrale Abschnitte von Spulenendabschnitten (5r) von einer Anfangswindung bis zu einer Endwindung aus der vorbestimmten Anzahl von Windungen bildet, und mit Schrägen (5p) versehen ist, die von der Gratlinie (5n) zu jedem Spuleneckabschnitt (5s) nach unten geneigt sind, in einer virtuellen Hüllfläche, die einen Außenumfangsabschnitt des Spulenendabschnitts (5r), einen Außenumfangsabschnitt des Spulendrahtpfadabschnitts (5q) und einen Außenumfangsabschnitt des Spuleneckabschnitts (5s) in der Spiralspule umfasst,
die mehreren vertieften Abschnitte (5e, 5f) sich auf einer Seite des Spulenendabschnitts (5 r) der Spiralspule befinden,
an einem Boden von mindestens einem der mehreren vertieften Abschnitte (5e, 5f) einen Außenumfangsabschnitt eines Spulenendabschnitts (5 r) und einen Außenumfangsabschnitt eines Spuleneckabschnitts (5s) des ringförmigen Körpers, der eine Windung aufweist, angeordnet sind, und
an einem Boden von mindestens einem anderen der mehreren vertieften Abschnitte (5e, 5f), Außenumfangsabschnitte von Spulenendabschnitten (5r) und Außenumfangsabschnitte von Spuleneckabschnitten (5s) von ringförmigen Körpern mit mehreren Windungen angeordnet sind.

11. Motor (1) nach Anspruch 10,
wobei sich die mehreren vertieften Abschnitte (5g, 5h) auf einer Seite des Spulendrahtpfadabschnitts (5q) der Spiralspule befinden,
an einem Boden von mindestens einem der mehreren vertieften Abschnitte (5g, 5h), ein Außenumfangsabschnitt eines Spulendrahtpfadabschnitts (5q) und ein Außenumfangsabschnitt eines Spuleneckabschnitts (5s) eines ringförmigen Körpers mit einer Windung angeordnet ist, und
an einem Boden von mindestens einem anderen der mehreren vertieften Abschnitte (5g, 5h), Außenumfangsabschnitte von Spulendrahtpfadabschnitten (5q) und Außenumfangsabschnitte von Spuleneckabschnitten (5s) von ringförmigen Körpern, die jeweils mehrere benachbarte Windungen aufweisen, angeordnet sind.

12. Motor (1) nach Anspruch 10,
wobei eine Vielzahl von vertieften Abschnitten (5i, 5j) über einer Außenumfangsfläche der Spiralspule angeordnet ist,
an einem Boden von mindestens einem der mehreren vertieften Abschnitte (5i, 5j) ein Außenumfangsabschnitt eines ringförmigen Körpers mit einer Windung angeordnet ist, und
am Boden von mindestens einem weiteren der mehreren vertieften Abschnitte (5i, 5j) Außenumfangsabschnitte von ringförmigen , die jeweils mehrere benachbarte Windungen aufweisen, angeordnet sind.

13. Motor (1) nach Anspruch 1, wobei
die Statorspule einen Luftspalt (46) zwischen einem inneren Umfangskantenabschnitt eines der ringförmigen Körper und dem Magnetkern aufweist.

14. Motor (1) nach Anspruch 1, wobei
die Statorspule einen Luftspalt (46) zwischen inneren Umfangskantenabschnitten mehrerer ringförmiger Körper aus den ringförmigen Körpern und dem Magnetkern aufweist, wobei sich die mehreren ringförmigen Körper auf einer Seite der Zahnspitze befinden.

## Revendications

1. Moteur (1) comprenant au moins : un noyau de stator (41) comportant un corps stratifié où une pluralité de feuilles de noyau de stator (41a) est stratifiée ; un stator (4) comportant une bobine de stator (5) qui utilise, en tant que partie d'un noyau magnétique, une dent (42) incluse dans le noyau de stator (41) ; et un rotor (3) supporté en rotation par le biais d'une pointe de la dent (42) du noyau de stator (41) et un entrefer,
dans lequel
la bobine de stator (5) constitue une bobine en spirale comportant des corps annulaires ayant un nombre prédéterminé de spires, chacun des corps annulaires comporte une portion de fil conducteur (5a), la portion de fil conducteur (5a) comporte une portion conductrice et un revêtement isolant (5b) qui recouvre la portion conductrice, la portion conductrice a une forme de section transversale sensiblement quadrangulaire,
une partie de chacun des corps annulaires qui est située sur chacun des côtés de surface de stratification de la dent (42) est définie comme une portion de chemin de fil de bobine (5q), une portion qui est une partie de chacun des corps annulaires et qui est située entre des portions d'extrémité d'une paire des portions de chemin de fil de bobine (5q) dans une même direction est définie comme une portion d'extrémité de bobine (5r), une portion où une extrémité de la portion de chemin de fil de bobine effectue une transition jusqu'à une extrémité de la portion d'extrémité de bobine (5r) est définie comme une portion d'angle de bobine (5s),
la bobine de stator (5) est pourvue d'au moins une portion évidée (5e, 5f, 5g, 5h, 5i, 5j, 5k, 51) qui est évidée par rapport à une surface d'enveloppe virtuelle comportant une portion périphérique externe de la portion d'extrémité de bobine (5r), une partie périphérique externe de la partie de chemin de fil de bobine (5q), et une portion périphérique externe de la portion d'angle de bobine (5s) dans la bobine en spirale,
**caractérisé en ce que**
une largeur de la bobine de stator (5) au niveau de la portion évidée (5e, 5f, 5g, 5h, 5i, 5j, 5k, 51) est plus étroite qu'une largeur de bobine de stator du corps annulaire d'une spire adjacente à la partie évidée (5e, 5f, 5g, 5h, 5i, 5j, 5k, 51) de la bobine en spirale.

2. Moteur (1) selon la revendication 1, comprenant en outre :
une pluralité de portions évidées (5e, 5f),
dans lequel
la pluralité de portions évidées est située sur un côté d'extrémité de bobine dans la bobine en spirale,
au fond d'au moins l'une des portions évidées (5e, 5f) sont situées une portion périphérique externe de la portion d'extrémité de bobine (5r) et la portion périphérique externe de la portion d'angle de bobine (5s) du corps annulaire ayant une spire, et
au fond d'au moins une autre des portions évidées (5e, 5f) sont situées des portions périphériques externes de portions d'extrémité de bobine (5r) et des portions périphériques externes de portions d'angle de bobine (5s) de corps annulaires ayant une pluralité de spires adjacentes les unes aux autres.

3. Moteur (1) selon la revendication 1, comprenant en outre :
une pluralité de portions évidées (5g, 5h),
dans lequel
la pluralité de portions évidées (5g, 5h) est située sur un côté de la portion de chemin de fil de bobine (5q) dans la bobine en spirale,
au fond d'au moins l'une de la pluralité de portions évidées (5g, 5h) sont situées une portion périphérique externe de la portion de chemin de fil de bobine (5q) et une portion périphérique externe de la portion d'angle de bobine (5s) du corps annulaire ayant une spire, et
au fond d'au moins une autre de la pluralité de portions évidées (5g, 5h) sont situées des portions périphériques externes de portions de chemin de fil de bobine (5q) et des portions périphériques externes de portions d'angle de bobine (5s) de corps annulaires ayant une pluralité de spires adjacentes les unes aux autres.

4. Moteur (1) selon la revendication 1, comprenant en outre :
une pluralité de portions évidées (5i, 5j),
dans lequel
la pluralité de portions évidées (5i, 5j) est située sur un côté de la portion de chemin de fil de bobine (5q) dans la bobine en spirale, et
au fond de chacune de la pluralité de portions évidées (5i, 5j) sont situées des portions périphériques externes de portions de chemin de fil de bobine (5q) et des portions périphériques externes de portions d'angle de bobine (5s) de corps annulaires ayant une pluralité de spires adjacentes les unes aux autres.

5. Moteur (1) selon la revendication 1, comprenant en outre :
une pluralité de portions évidées (5g, 5h),
dans lequel
la pluralité de portions évidées (5g, 5h) est située sur un côté de la portion de chemin de fil de bobine (5q) dans la bobine en spirale, et
au fond de chacune de la pluralité de portions évidées (5g, 5h) sont situées une portion périphérique externe de la portion de chemin de fil de bobine (5q) et une portion périphérique externe de la portion d'angle de bobine (5s) d'un corps annulaire ayant une spire.

6. Moteur (1) selon la revendication 1, comprenant en outre :
une pluralité de portions évidées (5i, 5j),
dans lequel
la pluralité de portions évidées est située sur une surface périphérique externe de la bobine en spirale,
au fond d'au moins l'une de la pluralité de portions évidées (5i, 5j) est située une portion périphérique externe d'un corps annulaire ayant une spire, et
au fond d'au moins une autre de la pluralité de portions évidées (5i, 5j) sont situées des portions périphériques externes de corps annulaires ayant une pluralité de spires adjacentes les unes aux autres.

7. Moteur (1) selon la revendication 1, comprenant en outre :
une pluralité de portions évidées (5i, 5j),
dans lequel
la pluralité de portions évidées (5i, 5j) est située sur une surface périphérique externe de la bobine en spirale, et
au fond de chacune de la pluralité de portions évidées (5i, 5j) sont situées des portions périphériques externes de corps annulaires ayant une pluralité de spires adjacentes les unes aux autres.

8. Moteur (1) selon la revendication 1, comprenant en outre :
une pluralité de portions évidées (5i, 5j),
dans lequel
la pluralité de portions évidées (5i, 5j) est située sur une surface périphérique externe de la bobine en spirale, et
au fond de chacune de la pluralité de portions évidées (5i, 5j) est située une portion périphérique externe d'un corps annulaire ayant une spire.

9. Moteur (1) selon la revendication 1, comprenant en outre :
une pluralité de portions évidées (5i, 5j, 5k, 5l),
dans lequel
la pluralité de portions évidées (5i, 5j, 5k, 51) est située sur une surface périphérique externe de la bobine en spirale,
au fond d'au moins l'une de la pluralité de portions évidées (5i, 5j) est située une portion périphérique externe d'un corps annulaire ayant une spire,
au fond d'au moins l'une de la pluralité de portions évidées (5j, 5j) sont situées des portions périphériques externes de corps annulaires ayant une pluralité de spires adjacentes les unes aux autres,
au moins une autre de la pluralité de portions évidées (5k, 51) est une portion évidée en forme de rainure qui communique d'une spire initiale à une spire finale parmi le nombre prédéterminé de spires, et des directions longitudinales de formes de rainure de différentes portions évidées de la pluralité de portions évidées se croisent les unes avec les autres.

10. Moteur (1) selon la revendication 1, comprenant en outre :
une pluralité de portions évidées (5e, 5f),
dans lequel
la bobine de stator forme, en tant que ligne de crête (5n), des portions centrales de portions d'extrémité de bobine (5r) d'une spire initiale à une spire finale parmi le nombre prédéterminé de spires, et est pourvue de pentes (5p) inclinées vers le bas à partir de la ligne de crête (5n) vers chaque portion d'angle de bobine (5s), dans une surface d'enveloppe virtuelle comportant une portion périphérique externe de la portion d'extrémité de bobine (5r), une portion périphérique externe de la portion de chemin de fil de bobine (5q), et une portion périphérique externe de la portion d'angle de bobine (5s) dans la bobine en spirale,
la pluralité de portions évidées (5e, 5f) est située sur un côté de la portion d'extrémité de bobine (5r) de la bobine en spirale,
au fond d'au moins l'une de la pluralité de portions évidées (5e, 5f) sont situées une portion périphérique externe d'une portion d'extrémité de bobine (5r) et une portion périphérique externe d'une portion d'angle de bobine (5s) du corps annulaire ayant une spire, et
au fond d'au moins une autre de la pluralité de portions évidées (5e, 5f) sont situées des portions périphériques externes de portions d'extrémité de bobine (5r) et des portions périphériques externes de portions d'angle de bobine (5s) de corps annulaires ayant une pluralité de spires adjacentes les unes aux autres.

11. Moteur (1) selon la revendication 10,
dans lequel la pluralité de portions évidées (5g, 5h) est située sur un côté de la portion de chemin de fil de bobine (5q) de la bobine en spirale,
au fond d'au moins l'une de la pluralité de portions évidées (5g, 5h) sont situées une portion périphérique externe d'une portion de chemin de fil de bobine (5q) et une portion périphérique externe d'une portion d'angle de bobine (5s) d'un corps annulaire ayant une spire, et
au fond d'au moins une autre de la pluralité de portions évidées (5g, 5h) sont situées des portions périphériques externes de portions de chemin de fil de bobine (5q) et des portions périphériques externes de portions d'angle de bobine (5s) de corps annulaires ayant une pluralité de spires adjacentes les unes aux autres.

12. Moteur (1) selon la revendication 10,
dans lequel une pluralité de portions évidées (5i, 5j) est située sur une surface périphérique externe de la bobine en spirale,
au fond d'au moins l'une de la pluralité de portions évidées (5i, 5j) est située une portion périphérique externe d'un corps annulaire ayant une spire, et
au fond d'au moins une autre de la pluralité de portions évidées (5i, 5j) sont situées des portions périphériques externes de corps annulaires ayant une pluralité de spires adjacentes les unes aux autres.

13. Moteur (1) selon la revendication 1, dans lequel
la bobine de stator a un entrefer (46) entre une portion de bord périphérique interne de l'un quelconque des corps annulaires et le noyau magnétique.

14. Moteur (1) selon la revendication 1, dans lequel
la bobine de stator a un entrefer (46) entre des portions de bord périphérique interne d'une pluralité de corps annulaires parmi les corps annulaires et le noyau magnétique, la pluralité de corps annulaires étant située sur un côté de la pointe de la dent.
